(19) Europäisches Patentamt
European Patent Office
Office européen des brevets

(11) EP 1 013 042 B1

(12) FASCICULE DE BREVET EUROPEEN

(45) Date de publication et mention de la délivrance du brevet: **04.02.2004 Bulletin 2004/06**

(21) Numéro de dépôt: **97913285.9**

(22) Date de dépôt: **07.11.1997**

(51) Int Cl.⁷: **H04L 27/26**

(86) Numéro de dépôt international: **PCT/FR1997/002013**

(87) Numéro de publication internationale: **WO 1998/021861 (22.05.1998 Gazette 1998/20)**

# (54) CONSTRUCTION DE SIGNAUX PROTOTYPES POUR TRANSMISSION MULTIPORTEUSE

ERZEUGUNG VON PROTOTYPSIGNALEN FÜR MEHRTRÄGERÜBERTRAGUNG

PROTOTYPE SIGNAL CONSTRUCTION FOR MULTICARRIER TRANSMISSION

(84) Etats contractants désignés: **AT BE CH DE DK ES FI FR GB GR IE IT LI LU MC NL PT SE**

(30) Priorité: **08.11.1996 FR 9613917**

(43) Date de publication de la demande: **28.06.2000 Bulletin 2000/26**

(73) Titulaires:
- **FRANCE TELECOM 75015 Paris (FR)**
- **TELEDIFFUSION DE FRANCE 75732 Paris Cédex 15 (FR)**
- **Société Civile Michel Alard 75004 Paris (FR)**

(72) Inventeur: **ALARD, Michel F-75004 Paris (FR)**

(74) Mandataire: **Vidon, Patrice et al Cabinet Vidon 16 B, rue Jouanet - B.P. 90333 Technopole Atalante 35703 Rennes Cedex 7 (FR)**

(56) Documents cités:
**WO-A-96/35278**

- **BULTAN: "A four-parameter atomic decomposition of chirplets" 1997 IEEE INTERNATIONAL CONFERENCE ON ACOUSTICS, SPEECH, AND SIGNAL PROCESSING, 21 - 24 avril 1997, NEW YORK, US, pages 3625-3628, XP002058780**
- **DAUBECHIES: "The wavelet transform, time-frequency localization and signal analysis" IEEE TRANSACTIONS ON INFORMATION THEORY., vol. 36, no. 5, septembre 1990, NEW YORK, US, pages 961-1005, XP000141837 cité dans la demande**
- **ALIEVA: "On the self-fractional Fourier functions" JOURNAL OF PHYICS A, vol. 29, no. 15, 7 août 1996, UK, pages L377-L379, XP002058781**
- **BASTIAANS: "On optimum oversampling in the Gabor scheme" 1997 IEEE INTERNATIONAL CONFERENCE ON ACOUSTICS, SPEECH, AND SIGNAL PROCESSING, 21 - 24 avril 1997, NEW YORK, US, pages 2101-2104, XP002058782**
- **XIANG-GEN XIA ET AL.: "Generalized-marginal time-frequency distributions" IEEE-SP INTERNATIONAL SYMPOSIUM ON TIME-FREQUENCY AND TIME-SCALE ANALYSIS, 18 - 21 juin 1996, NEW YORK, 1996, pages 509-512, XP002058783**

EP 1 013 042 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

### 1. Domaine de l'invention

#### 1.1 Domaine général

Le domaine de l'invention est celui de la transmission ou de la diffusion de données numériques, ou de données analogiques et échantillonnées, destinées à être reçues notamment par des mobiles. Plus précisément, l'invention concerne des signaux produits à l'aide de nouvelles modulations, ainsi que les techniques de modulation et de démodulation correspondantes.

Depuis de nombreuses années, on cherche à construire des modulations adaptées à des canaux fortement non-stationnaires, tels que les canaux de transmission vers des mobiles. Dans de tels canaux, le signal émis est affecté d'évanouissements et de trajets multiples. Les travaux menés par le CCETT dans le cadre du projet européen EUREKA 147 (DAB: Digital Audio Broadcasting, ou Diffusion Audionumérique) ont montré l'intérêt, pour ce type de canaux, des modulations multiporteuses, et en particulier de l'OFDM (Orthogonal Frequency Division Multiplexing).

L' OFDM a été retenu dans le cadre de ce projet européen comme base de la norme DAB. Cette technique a été également retenue comme modulation pour la diffusion de programmes de télévision (DVB). Cependant, on constate un certain nombre de limitations (précisées par la suite) lorsqu'on aborde le problème de modulations codées à haute efficacité spectrale, telles que celles requises pour les applications de TV numérique.

#### 1.2. Applications possibles

L'invention trouve des applications dans de très nombreux domaines, notamment lorsque une haute efficacité spectrale est souhaitée et que le canal est fortement non-stationnaire.

Une première catégorie d'applications concerne la radiodiffusion numérique terrestre, qu'il s'agisse d'image, de son et/ou de données. En particulier, l'invention peut s'appliquer à la diffusion synchrone, qui génère intrinsèquement des trajets multiples de longue durée. Elle s'applique également avantageusement à la diffusion vers des mobiles.

Une autre catégorie d'applications concerne les radiocommunications numériques. L'invention peut trouver notamment des applications dans des systèmes de communication numérique vers des mobiles à haut débit, dans le cadre par exemple de l'UMTS. Elle peut également être envisagée pour des réseaux locaux radio à haut débit (type HIPERLAN).

Une troisième catégorie d'applications est celle des transmissions sous-marines. Le canal de transmission en acoustique sous-marine est fortement perturbé du fait de la faible vitesse de transmission des ondes acoustiques dans l'eau. Ceci conduit à un étalement important des trajets multiples et du spectre Doppler. Les techniques de modulation multiporteuses sont donc bien adaptées à ce domaine, et tout particulièrement les techniques objet de la présente invention.

### 2. Etat de la technique

#### 2.1. Remarques théoriques sur la représentation des signaux

Avant de présenter les signaux selon l'invention, on décrit ci-dessous les signaux connus. Cette description repose sur une approche générale des signaux multiporteuses définie par les inventeurs, et nouvelle en elle-même. Cette généralisation n'a en effet aucun équivalent dans l'état de la technique, et n'est nullement évidente pour l'homme du métier. Elle doit donc être considérée comme une partie de l'invention, et non comme appartenant à l'état de la technique.

On s'intéresse à des signaux réels (une grandeur électrique par exemple), à énergie finie, et fonction du temps. Les signaux peuvent donc être représentés par des fonctions réelles de $\mathbf{L^2(R)}$. En outre, ces signaux sont à bande limitée et leur spectre est contenu dans

$$\left[f_c - \frac{w}{2}, f_c + \frac{w}{2}\right],$$

$f_c$ étant la "fréquence porteuse" du signal. On peut donc de façon équivalente représenter un signal réel a(t) par le son enveloppe complexe s(t) avec:

$$s(t) = e^{-2i\pi f_c t} F_A[a](t) \quad (1)$$

où $F_A$ désigne le filtre analytique.

Le signal s(t) appartient à un sous espace vectoriel (caractérisé par la limitation de bande à $\pm \frac{w}{2}$) de l'espace des fonctions complexes d'une variable réelle et de carré sommable $\mathbf{L^2}$ **(R)**. On peut définir cet espace vectoriel de deux façons différentes, selon qu'on le construit sur le corps des complexes ou le corps des réels. A chacun de ces espaces, on peut associer un produit scalaire à valeur dans **C** ou dans **R** et construire un espace de Hilbert. On appellera **H** l'espace de Hilbert construit sur le corps des complexes et $\mathbf{H_R}$ l'espace de Hilbert construit sur le corps des réels.

Les produits scalaires correspondants s'écrivent:

$$\langle x|y\rangle = \int_R x(t)\, y^*(t)dt \qquad \text{dans le cas de } \mathbf{H} \quad (2)$$

et

$$\langle x|y\rangle_R = \Re e\int_R x(t)\, y^*(t)\, dt \qquad \text{dans le cas de } \mathbf{H_R} \quad (3)$$

Les normes associées sont évidemment identiques dans les deux cas:

$$\|x\| = \left[\int_R |x(t)|^2 dt\right]^{1/2} \quad (4)$$

2.2. Principes généraux de l'OFDM

Les principes généraux de l'OFDM sont par exemple présentées dans le brevet français FR-86 09622 déposé le 2 juillet 1986. L'idée de base de cette technique est de transmettre des symboles codés comme des coefficients de formes d'ondes élémentaires confinées autant que possible dans le plan temps-fréquence, et pour lesquels le canal de transmission peut être considéré comme localement stationnaire. Le canal apparaît alors comme un simple canal multiplicatif caractérisé par la distribution du module des coefficients, qui suit une loi de Rice ou de Rayleigh.

On assure ensuite la protection contre les évanouissements à l'aide d'un code utilisable en décision pondérée, en association à un entrelacement en temps et en fréquence qui garantit que les symboles intervenant dans la maille minimale du code soient dans toute la mesure du possible affectés par des évanouissements indépendants.

Cette technique de codage avec entrelacement dans le plan temps-fréquence est connue sous le nom de COFDM. Elle est par exemple décrite dans le document [22] (voir annexe 1 (pour simplifier la lecture, la plupart des références de l'état de la technique sont listées dans cette annexe 1. Celle-ci, ainsi que les annexes 2 et 3 doivent bien sûr être considérées comme des éléments à part entière de la présente description)).

Il existe essentiellement deux types de modulations OFDM connues. Les appellations utilisées dans la littérature étant souvent ambiguës, nous introduirons ici des appellations nouvelles plus précises tout en rappelant la correspondance avec la littérature existante. Nous utiliserons l'appellation générique OFDM, suivi d'un suffixe précisant le type de modulation à l'intérieur de cette famille.

2.3. OFDM/QAM

2.3.1. Principes théoriques

Une première catégorie de modulations est constituée d'un multiplex de porteuses QAM (Quadrature Amplitude Modulation), ou éventuellement en QPSK (Quadrature Phase Shift Keying) dans le cas particulier de données binaires. Nous désignerons par la suite ce système sous le nom OFDM/QAM. Les porteuses sont toutes synchronisées, et les fréquences porteuses sont espacées de l'inverse du temps symbole. Bien que les spectres de ces porteuses se recouvrent, la synchronisation du système permet de garantir l'orthogonalité entre les symboles émis par différentes

porteuses.

Les références [1] à [7] donnent un bon aperçu de la littérature disponible sur ce sujet.

Pour plus de simplicité dans l'écriture, et selon l'approche nouvelle de l'invention, on représentera les signaux sous leur forme analytique décrite ci-dessus. Dans ces conditions, l'équation générale d'un signal OFDM/QAM s'écrit:

$$s(t) = \sum_{m,n} a_{m,n} x_{m,n}(t) \qquad (5)$$

Les coefficients $a_{m,n}$ prennent des valeurs complexes représentant les données émises. Les fonctions $x_{m,n}(t)$ sont des translatées dans l'espace temps-fréquence d'une même fonction prototype x(t):

$$x(t) = \begin{cases} \frac{1}{\sqrt{\tau_0}} & \text{si } |t| \leq \tau_0/2 \\ 0 & \text{ailleurs} \end{cases} \qquad (6)$$

$$x_{m,n}(t) = e^{i(2\pi m\nu_0 t+\varphi}x(t - n\tau_0) \text{ avec } \nu_0\tau_0 = 1 \qquad (7)$$

$\varphi$ étant une phase quelconque, que l'on peut arbitrairement fixer à 0. La fonction x(t) est centrée, c'est-à-dire que ses moments d'ordre 1 sont nuls, soit:

$$\int t|x(t)|^2 dt = \int f|X(f)|^2 df = 0, \qquad (8)$$

X(f) désignant la transformée de Fourier de x(t).

Dans ces conditions, on observe que:

$$\begin{aligned} \int t|x_{m,n}(t)|^2 dt &= n\tau_0 \\ \int f|X_{m,n}(f)|^2 df &= m\nu_0 \end{aligned} \qquad (9)$$

Les barycentres des fonctions de base forment donc un réseau du plan temps fréquence engendré par les vecteurs ($\tau_0$, 0) et (0, $\nu_0$). Ce réseau est de densité unité, c'est à dire que $\nu_0\tau_0 = 1$. On pourra se reporter à l'article [9] pour une discussion plus détaillée sur ce sujet.

La fonction prototype x(t) a ceci de particulier que les fonctions $\{x_{m,n}\}$ sont orthogonales entre elles, et plus précisément constituent une base hilbertienne de $\mathbf{L}^2(\mathbf{R})$, soit :

$$\langle x_{m,n} | x_{m',n'} \rangle = \begin{cases} 1 & \text{si } (m,n) = (m',n') \\ 0 & \text{sinon} \end{cases} \qquad (10)$$

Projeter un signal sous cette base équivaut simplement à découper le signal en séquences de durée $\tau_0$ et à représenter chacune de ces séquences par le développement en série de Fourier correspondant. Ce type de décomposition constitue un premier pas vers une localisation à la fois en temps et en fréquence, par opposition à l'analyse de Fourier classique, qui assure une localisation fréquentielle parfaite avec une perte totale de l'information temporelle.

Malheureusement, si la localisation temporelle est excellente, la localisation fréquentielle est beaucoup moins bonne, du fait de la décroissante lente de X(f). Le théorème de Balian-Low-Coifman-Semmes (voir [9], p 976) montre

d'ailleurs que si l'on appelle X la transformée de Fourier de x, tx(t) et fX(f) ne peuvent être simultanément de carré sommable.

2.3.2. L'OFDM/QAM avec intervalle de garde

D'une manière générale, on peut caractériser la tolérance d'une modulation OFDM vis-à-vis des trajets multiples et de l'étalement Doppler par un paramètre mesurant de manière globale la variation du niveau d'interférence entre symboles (IES) en fonction d'un décalage en temps ou en fréquence. La justification de ce concept est donnée en annexe 2. Ce paramètre de tolérance est appelé $\xi$ et est défini par la relation:

$$\xi = 1/4\pi\Delta t\Delta f \quad (11)$$

avec:

$$\Delta t^2 \int |x(t)|^2\, dt = \int t^2\, |x(t)|^2\, dt \quad (12)$$

$$\Delta f^2 \int |X(f)|^2\, df = \int f^2 |X(f)|^2\, df \quad (13)$$

En vertu de l'inégalité de Heisenberg, $\xi$ ne peut pas dépasser l'unité.

Compte tenu du théorème de Balian-Low-Coifman-Semmes cité précédemment, le paramètre $\xi$ vaut 0 pour l'OFDM/QAM. Il s'agit là d'un défaut important de la modulation OFDM/QAM telle que décrite ci-dessus. Ceci se caractérise en pratique par une forte sensibilité aux erreurs temporelles, et par conséquent aux trajets multiples.

Ce défaut peut être contourné par l'utilisation d'un intervalle de garde décrit par exemple dans [5]. Il s'agit là d'un artifice consistant à prolonger la fenêtre rectangulaire de la fonction prototype. La densité du réseau des symboles de base est alors strictement inférieure à l'unité.

Cette technique est possible du fait que l'on retrouve à l'intérieur d'un symbole prolongé par un intervalle de garde une infinité de versions translatées du symbole initial. Bien sûr, ceci ne fonctionne que parce que la fonction prototype est une fenêtre rectangulaire. En ce sens, l'OFDM/QAM avec intervalle de garde constitue un point singulier unique.

La modulation OFDM/QAM avec intervalle de garde est à la base du système DAB. Cet intervalle de garde permet de limiter l'interférence entre symboles, au prix d'une perte de performance, puisqu'une partie de l'information émise n'est pas réellement utilisée par le récepteur, mais sert seulement à absorber les trajets multiples.

Ainsi, dans le cas du système DAB, où l'intervalle de garde représente 25% du symbole utile, la perte est de 1 dB. En outre, il existe une perte supplémentaire, due au fait que pour obtenir une efficacité spectrale globale donnée, il faut compenser la perte due à l'intervalle de garde par un meilleure efficacité du code utilisé.

Cette perte est marginale dans le cas du système DAB, parce que l'efficacité spectrale est faible. Par contre, si l'on vise une efficacité spectrale globale de 4 bits/Hz, il faut utiliser un code à 5 bits/Hz, soit selon le théorème de Shannon une perte de l'ordre de 3 dB. La perte globale est donc dans ce cas d'environ 4 dB.

2.3.3. Autres systèmes OFDM/OAM

On peut imaginer d'autres systèmes de type OFDM/QAM. Malheureusement, aucune modulation QAM filtrée (c'est à dire utilisant une mise en forme conventionnelle de type demi-Nyquist (ou, plus exactement, « racine carrée de Nyquist »)), ne vérifie les contraintes d'orthogonalité requises. Les fonctions prototypes connues vérifiant les critères d'orthogonalité requis sont:

- la fenêtre rectangulaire ;
- le sinus cardinal.

Ces deux exemples sont triviaux, et apparaissent duaux l'un de l'autre par transformée de Fourier. Le cas de la fenêtre rectangulaire correspond à l'OFDM/QAM sans intervalle de garde. Le cas du sinus cardinal correspond à un multiplex fréquentiel classique (c'est-à-dire dont les porteuses ont des spectres disjoints) avec un roll-off de 0%, ce qui constitue un cas asymptotique difficilement réalisable en pratique.

Dans chacun de ces cas, on observe que la fonction prototype est parfaitement bornée, soit en temps, soit

en fréquence, mais possède une décroissance médiocre (en 1/t ou 1/f) dans le domaine dual.

Le théorème de Balian-Low-Coifinan-Semmes laisse d'ailleurs peu d'espoir que des solutions satisfaisantes puissent exister. Comme indiqué précédemment, ce théorème démontre que tx(t) et fX(f) ne peuvent être simultanément de carré sommable. On ne peut donc pas espérer trouver une fonction x(t) telle que x(t) et X(f) décroissent simultanément avec un exposant inférieur à -3/2.

Ceci n'exclut d'ailleurs pas que puissent exister des fonctions satisfaisantes aux yeux d'un ingénieur. Néanmoins, un article récent [10] traitant de ce sujet exhibe un autre exemple de fonction prototype ayant les propriétés requises. L'allure de la fonction prototype proposée dans cet article est très éloignée de ce que l'on peut souhaiter en terme de concentration temporelle. Il est donc probable qu'il n'existe pas de solution satisfaisante de type OFDM/QAM.

En conclusion, l'OFDM/QAM, correspondant à l'utilisation d'un réseau de densité 1 et à des coefficients $a_{m,n}$ complexes ne peut être mis en pratique que dans le cas d'une fenêtre temporelle rectangulaire et de l'utilisation d'un intervalle de garde. L'homme du métier cherchant d'autres modulations est donc conduit à se tourner vers les techniques décrites ci-dessous sous le nom d'OFDM/OQAM.

2.4. OFDM/OQAM

Une deuxième catégorie de modulations utilise en effet un multiplex de porteuses OQAM (Offset Quadrature Amplitude Modulation). Nous désignerons par la suite ce système sous le nom OFDM/OQAM. Les porteuses sont toutes synchronisées, et les fréquences porteuses sont espacées de la moitié de l'inverse du temps symbole. Bien que les spectres de ces porteuses se recouvrent, la synchronisation du système et le choix des phases des porteuses permet de garantir l'orthogonalité entre les symboles émis par différentes porteuses. Les références [11-18] donnent un bon aperçu de la littérature disponible sur ce sujet.

Pour plus de simplicité dans l'écriture, on représentera les signaux sous leur forme analytique. Dans ces conditions, l'équation générale d'un signal OFDM/OQAM s'écrit:

$$s(t) = \sum_{m,n} a_{m,n} x_{m,n}(t) \qquad (14)$$

Les coefficients $a_{m,n}$ prennent des valeurs réelles représentant les données émises. Les fonctions $x_{m,n}(t)$ sont des translatées dans l'espace temps-fréquence d'une même fonction prototype x(t):

$$\begin{cases} x_{m,n}(t) = e^{i(2\pi m \nu_0 t + \varphi)} x(t - n\tau_0) & si \text{ m + n est pair} \\ x_{m,n}(t) = i\, e^{i(2\pi m \nu_0 t + \varphi)} x(t - n\tau_0) & si \text{ m + n est impair} \end{cases} \qquad (15)$$

avec $\nu_0 \tau_0 = 1/2$,

$\varphi$ étant une phase quelconque que l'on peut arbitrairement fixée égale à 0.

Les barycentres des fonctions de base forment donc un réseau du plan temps-fréquence engendré par les vecteurs ($\tau_0$, 0) et (0, $\nu_0$), tel qu' illustré en figure 2.

Ce réseau est de densité 2. Les fonctions $x_{m,n}(t)$ sont orthogonales au sens du produit scalaire dans R. Dans les approches connues, la fonction prototype est bornée en fréquence, de telle sorte que le spectre de chaque porteuse ne recouvre que celui des porteuses adjacentes. En pratique, les fonctions prototypes considérées sont des fonctions paires (réelles ou éventuellement complexes) vérifiant la relation suivante:

$$\begin{cases} X(f) = 0 & \text{si } |f| \geq \nu_0 \\ |X(f)|^2 + |X(f - \nu_0)|^2 = 1/\nu_0 & \text{si } 0 \leq f \leq \nu_0 \end{cases} \qquad (16)$$

Un choix possible pour x(t) est la réponse impulsionnelle d'un filtre demi-Nyquist 100% roll-off, soit

$$X(f) = \begin{cases} \frac{1}{\sqrt{\nu_0}} \cos \pi f \tau_0 & \text{si } |f| \leq \nu_0 \\ 0 & \text{ailleurs} \end{cases} \qquad (17)$$

Lorsqu'on observe x(t) et sa transformée de Fourier, on note que X(f) est à support borné et que x(t) décroît en $t^{-2}$, c'est à dire un résultat notablement meilleur que la limite théorique découlant du théorème de Balian-Low-Coifman-Semmes. Les formes d'onde élémentaires sont mieux localisées dans le plan temps fréquence que dans le cas de l'OFDM/QAM, ce qui confère à cette modulation un meilleur comportement en présence de trajets multiples et de Doppler. Comme précédemment, on peut définir le paramètre $\xi$ mesurant la tolérance de la modulation au délai et au Doppler. Ce paramètre $\xi$ vaut 0.865.

2.5 OFDM/MSK

Une autre solution, décrite dans le document WO-A-96 35278 aux noms des mêmes déposants que la présente demande, consiste à utiliser une fonction prototype différente. Ladite fonction prototype x(t) est une fonction paire, nulle en dehors de l'intervalle $[-\tau_0,\tau_0]$, et vérifiant la relation :

$$\begin{cases} x(t) = 0 & si\ |t| \geq \tau_0 \\ |x(t)|^2 + |x(t-\tau_0)|^2 = 1/\tau_0 & si\ 0 \leq t < \tau_0 \end{cases}$$

De façon avantageuse, ladite fonction prototype x(t) est définie par:

$$x(t) = \begin{cases} \frac{1}{\sqrt{\tau_0}} \cos \pi t / 2\tau_0 & si\quad |t| \leq \tau_0 \\ 0 & ailleurs \end{cases}$$

Cette fonction peut être considérée comme duale par transformée de Fourier de la fonction prototype utilisée dans le cas de l'OFDM/OQAM. Ce cas particulier est appelé OFDM/MSK. Les performances en terme de résistance au Doppler et aux trajets multiples sont équivalentes à l'OFDM/OQAM, et la réalisation du récepteur est simplifiée.

2.6. OFDM/IOTA

Une autre solution, décrite également dans la demande de brevet FR-95 05455 déjà citée, consiste à utiliser une fonction prototype qui n'est ni bornée en temps, ni bornée en fréquence, maisqui possède des propriétés de décroissance rapide à la fois dans le domaine temporel et le domaine fréquentiel. Cette fonction prototype x(t) est caractérisée par l'équation:

$$x(t) = \frac{y(t)}{\sqrt{\tau_0 \sum_k |y(t-k\tau_0)|^2}}$$

la fonction y(t) étant définie par sa transformée de Fourier Y(f):

$$Y(f) = \frac{G(f)}{\sqrt{\nu_0 \sum_k |G(f-k\nu_0)|^2}}$$

où G(f) est une fonction gaussienne normalisée du type : $G(f) = (2\alpha)^{1/4} e^{-\pi\alpha f^2}$

Dans le cas de la modulation OFDM/IOTA, le paramètre $\alpha$ est fixé à 1. Dans ce cas, la fonction prototype correspondante, notée $\mathfrak{I}$, est identique à sa transformée de Fourier.

La réalisation du récepteur est plus simple que dans le cas de l'OFDM/OQAM, bien que légèrement plus complexe que dans le cas précédent, mais les performances sont sensiblement supérieures.

## 3. Inconvénients des systèmes connus

Ces systèmes connus présentent certains inconvénients et limites, notamment dans les canaux très perturbés, et/ou lorsque une haute efficacité est requise.

### 3.1. OFDM/QAM

Le problème principal du système OFDM/QAM est qu'il nécessite impérativement l'utilisation d'un intervalle de garde. Comme indiqué précédemment, ceci engendre une perte d'efficacité notable lorsque l'on vise de hautes efficacités spectrales.

De plus, les symboles émis sont mal concentrés dans le domaine fréquentiel, ce qui limite également les performances dans des canaux fortement non-stationnaires. En particulier, cet étalement rend difficile l'utilisation d'égaliseurs.

### 3.2. OFDM/OQAM

A l'inverse, les performances fréquentielles de l'OFDM/OQAM sont plutôt satisfaisantes et le problème de la perte liée à l'intervalle de garde ne se pose pas. En revanche, la réponse impulsionnelle de la fonction prototype a une décroissance temporelle relativement lente, soit en $1/x^2$.

Ceci implique deux types de difficultés. Tout d'abord, la forme d'onde peut difficilement être tronquée sur un intervalle de temps court, ce qui implique un traitement complexe au niveau du récepteur. En outre, ceci complique également d'éventuels systèmes d'égalisation.

En d'autres termes, l'efficacité des techniques OFDM/OQAM est supérieure à celle de l'OFDM/QAM, mais ces techniques s'avèrent plus complexes à mettre en oeuvre, et donc coûteuses, en particulier dans les récepteurs.

### 3.3. OFDM/MSK

La modulation OFDM/MSK présente des performances en terme de résistance au Doppler et aux trajets multiples par rapport à l'OFDM/OQAM. Ces performances sont inférieures à celles de l'OFDM/IOTA. Par contre la limitation temporelle de la fonction prototype simplifie le récepteur.

### 3.4. OFDM/IOTA

La modulation OFDM/IOTA présente des performances optimales en terme de résistance au Doppler et aux trajets multiples. Par contre, la réalisation du récepteur est plus complexe que dans le cas de l'OFDMIMSK.

## 4. Présentation de l'invention

### 4.1 Objectifs de l'invention

L'invention a notamment pour objectif de pallier ces différents inconvénients et limitations de l'état de la technique.

Ainsi, un objectif de l'invention est de fournir un signal numérique destiné à être transmis ou diffusé vers des récepteurs, qui permette d'obtenir des performances équivalentes à la meilleure solution connue, soit l'OFDM/IOTA, tout en améliorant la concentration de réponse temporelle de la fonction prototype, de façon notamment à simplifier le traitement au niveau du récepteur.

L'invention a également pour objectif de fournir un tel signal, permettant la réalisation de récepteurs à complexité et coût limités, en particulier en ce qui concerne la démodulation et l'égalisation.

Un objectif complémentaire de l'invention est de fournir des émetteurs, des récepteurs, des procédés de transmission ou de diffusion, des procédés de réception et des procédés de construction, c'est-à-dire de définition, d'une modulation correspondants à un tel signal.

### 4.2 Caractéristiques principales de l'invention

Ces objectifs, ainsi que d'autres qui apparaîtront par la suite, sont atteints selon l'invention par un signal multiporteuse destiné à être transmis vers des récepteurs numériques, notamment dans un canal de transmission non-stationnaire, correspondant au multiplexage en fréquence de plusieurs porteuses élémentaires correspondants chacunes à une série de symboles, construit sur un réseau temps-fréquence non-orthogonal de densité 2.

Avantageusement, ce réseau est un réseau quinconce, dans lequel, l'espacement entre deux porteuses voisines étant égal à $\nu_0$,

- le temps symbole $\tau_0$ est égal au quart de l'inverse de l'espacement $\nu_0$ entre deux porteuses voisines,
- les symboles émis sur une même porteuse sont espacés de 2 temps symbole $\tau_0$.
- les symboles émis sur des porteuses adjacentes sont décalées du temps symbole $\tau_0$.

Préférentiellement, chaque porteuse subit un filtrage de mise en forme de son spectre.
Ce filtrage est choisi de façon que chaque élément de symbole soit concentré autant que possible à la fois dans le domaine temporel et dans le domaine fréquentiel.
Notamment, un tel signal peut répondre à l'équation suivante :

$$s(t) = \sum_{m+n \; pair} a_{m,n} x_{m,n}(t)$$

où :

$a_{m,n}$ est un coefficient réel représentatif du signal source, choisi dans un alphabet de modulation prédéterminé;
m est un entier représentant la dimension fréquentielle;
n est un entier représentant la dimension temporelle;
t représente le temps;
$x_{m,n}(t)$ est une fonction de base, translatée dans l'espace temps-fréquence d'une même fonction prototype x(t) prenant des valeurs réelles ou complexes, soit :

$$x_{m,n}(t) = e^{i\varphi_{m,n}} e^{i(2\pi m \upsilon_0 t + \varphi)} x(t - n\tau_0)$$

avec $\upsilon_0 \tau_0 = 1/4$
avec

$$\varphi_{m,n} = (m+n+mn+(n^2-m^2)/2)\pi/2$$

où $\varphi$ est un paramètre de phase arbitraire,

et où lesdites fonctions de base $\{x_{m,n}\}$ sont orthogonales entre elles, la partie réelle du produit scalaire de deux fonctions de base différentes étant nulle.
Ainsi, l'invention repose sur un système de modulation qui utilise des fonctions prototypes aussi concentrées que possible dans le plan temps-fréquence. L'intérêt de cette approche est de disposer d'une modulation ayant des performances identiques à celle de la modulation OFDM/IOTA, tout en bénéficiant d'une réponse impulsionnelle à décroissance plus rapide.
En d'autres termes, l'invention a pour objet de nouveaux systèmes de modulation construits comme l'OFDM/IOTA sur un réseau de densité 2. La différence essentielle par rapport aux systèmes déjà connus est que le réseau de base est un réseau en quinconce de densité 1/2.
Parmi les modulations proposées, on trouve des modulations utilisant des fonctions prototypes qui ne sont bornés ni en temps ni en fréquence, mais qui présentent par compte des propriétés de décroissance rapide à la fois en temps et en fréquence, et une concentration quasi-optimale dans le plan temps-fréquence.
De tels signaux ne sont nullement évidents pour l'homme du métier, au vu de l'état de la technique. Comme indiqué précédemment, il existe fondamentalement deux modes de construction de modulations de type OFDM.
Le premier mode de construction connu utilise un réseau orthogonal de densité 1. Cette première solution utilise une base de décomposition des signaux ou tout signal est découpé en intervalles, chaque intervalle étant ensuite décomposé sous forme de série de Fourier. C'est la solution OFDM/QAM. La littérature donne peu d'exemples de solutions alternatives construites sur le même réseau, et les résultats obtenus sont d'un faible intérêt pratique [10].
En outre, la technique OFDM/QAM est la seule qui puisse bénéficier de la méthode de l'intervalle de garde. La solution OFDM/QAM est donc un point singulier qui ne permet pas d'extensions.
Le deuxième mode de construction connue utilise un réseau orthogonal de densité 2. Il regroupe un ensemble de modulations telles que L'OFDM/OQAM, l'OFDM/MSK et l'OFDM/IOTA. Ces modulations diffèrent par le choix de

la fonction prototype, qui est soit bornée en fréquence (OFDM/OQAM), soit bornée en temps (OFDM/MSK), soit n'est bornée ni en temps, ni en fréquence, mais est à décroissance rapide dans les deux dimensions (OFDM/IOTA).

Par conséquent, la construction de nouvelles modulations qui ne soient pas construits sur de tels réseaux orthogonaux n'est pas évidente.

Toutes les variantes de l'invention décrites ci-dessous présentent l'avantage d'utiliser une fonction prototype à décroissance rapide, de telle sorte que la fonction puisse être aisément tronquée.

Le principe de base consiste à construire une fonction prototype qui présente les propriétés d'orthogonalité souhaitées sur un réseau de type quinconce. La méthode de construction, qui est détaillée en annexe 3, consiste à partir d'un fonction prototype présentant les propriétés d'orthogonalité souhaitées sur un réseau orthogonal et d'effectuer une rotation de 45° dans le plan temps fréquence. L'opérateur qui permet cette rotation n'est pas un opérateur classique. Il peut être assimilé à la racine carrée d'une transformée de Fourier, et est noté $F^{1/2}$. La justification mathématique de cette notation est donnée en annexe 3.

En principe, la méthode peut être appliquée à n'importe quelle fonction prototype qui permet de construire une base hilbertienne sur un réseau orthogonal de densité 1/2. A ce titre, les fonction prototypes de L'OFDM/OQAM, de l'OFDM/MSK sont utilisables. Elles conduisent toutefois à des résultats qui sont des fonctions complexes. En conséquence, les résultats obtenus ont peu d'intérêt pratique.

Considérons les conditions nécessaires pour que cette méthode de construction conduise à une fonction réelle. Soit une fonction prototype x(t) réelle paire permettant de générer une base hilbertienne sur un réseau orthogonal de densité 2, et la fonction y(t) définie par:

$$y = F^{1/2}x$$

où $F^{1/2}$ est l'opérateur racine carrée de la transformée de Fourier comme défini ci-dessus. Au niveau des fonctions d'ambiguïté (telles que définies dans l'annexe 2), cet opérateur réalise une rotation d'angle -π/4 dans le plan temps fréquence. Pour que la fonction y(t) soit réelle paire, il faut que sa fonction d'ambiguïté présente une symétrie par rapport aux axes temps et fréquence. Ceci implique donc que la fonction x(t) présente, en sus de la symétrie par rapport aux axes temps et fréquence, une symétrie par rapport aux diagonales du plan temps-fréquence. Une telle propriété ne peut être vérifiée que si la fonction x(t) est identique à sa transformée de Fourier. Or nous ne connaissons actuellement qu'une seule fonction ayant cette propriété, qui est la fonction prototype de l'OFDM/IOTA, soit $\Im$.

On définit donc la fonction IOTA π/4 par la relation:

$$\Im^{\pi/4} = F^{1/2}\Im$$

Cette fonction est par construction réelle et paire. La fonction d'ambiguïté de cette fonction s'annule donc sur un réseau en quinconce.

L'ensemble des fonctions

$$\{\Im^{\pi/4}_{m,n}\}$$

défini par:

$$\Im^{\pi/4}_{m,n}(t) = e^{i\varphi_{m,n}} e^{i\pi(m-n)t} \Im^{\pi/4}(t-(m+n)/2)$$

avec

$$\varphi_{m,n} = (m+n+mn+(n^2-m^2)/2)\pi/2$$

constitue une base hilbertienne.

En redéfinissant les indices, on peut réécrire la définition de cet ensemble de la façon suivante:

$$\Im^{\pi/4}_{m,n}(t) = e^{i\varphi_{m,n}} e^{i\pi m t} \Im^{\pi/4}(t-n/2) \quad , m+n \text{ pair}$$

avec

$$\varphi_{m,n}=(n - mn/2 + (n^2 - m^2)/4 )\pi/2$$

L'invention concerne également un procédé de transmission d'un signal numérique, notamment dans un canal de transmission non-stationnaire, comprenant les étapes suivantes:

- codage canal d'un signal numérique à transmettre, délivrant des coefficients numériques réels $a_{m,n}$ choisis dans un alphabet prédéterminé ;
- construction d'un signal s(t) répondant à l'équation définie ci-dessus ;
- émission d'un signal ayant pour enveloppe complexe ledit signal s(t) vers au moins un récepteur.

De façon avantageuse, un tel procédé comprend de plus une étape d'entrelacement en fréquence et/ou en temps, appliquée aux éléments binaires formant ledit signal numérique à transmettre ou aux coefficients numériques $a_{m,n}$.

Cela permet d'assurer des performances optimales dans des canaux non-stationnaires.

L'invention concerne également les émetteurs d'un tel signal.

L'invention concerne encore un procédé de réception d'un signal tel que décrit ci-dessus, qui comprend les étapes suivantes :

- réception d'un signal ayant pour enveloppe complexe un signal r(t) correspondant au signal s(t) à l'émission ;
- estimation de la réponse du canal de transmission, comprenant une estimation de la réponse en phase $\theta_{m,n}$ et de la réponse en amplitude $\rho_{m,n}$ ;
- démodulation dudit signal r(t), comprenant les étapes suivantes :

- multiplication dudit signal r(t) par la fonction prototype x(t) ;
- repliement de la forme d'onde filtrée modulo $2\tau_0$ ;
- application d'une transformée de Fourier (FFT) ;
- sélection des échantillons pour lesquels m+n est pair ;
- correction de la phase $\theta_{m,n}$ induite par le canal de transmission ;
- correction de la phase correspondant au terme

$$e^{i\varphi_{m,n}} \; ;$$

- sélection de la partie réelle du coeeficient obtenu $\tilde{a}_{m,n}$ correspondant au coefficient $a_{m,n}$ émis pondéré par la réponse en amplitude $\rho_{m,n}$ du canal de transmission.

  De façon préférentielle, ce procédé de réception comprend une étape de désentrelacement en fréquence et/ou en temps desdits coefficients numériques réels $\tilde{a}_{m,n}$ et, éventuellement, des valeurs correspondantes $\rho_{m,n}$ de la réponse de l'amplitude du canal, ledit désentrelacement étant inverse de un entrelacement mis en oeuvre à l'émission, et/ou une étape de décodage en décision pondérée adapté au codage canal mis en oeuvre à l'émission.

  L'invention concerne également les récepteurs correspondants.

  Enfin, l'invention concerne également un procédé préférentiel de construction d'une fonction prototype x(t) pour un signal tel que décrit ci-dessus. Ce procédé est présenté dans les annexes jointes.

5. Description de modes de réalisation particuliers de l'invention

5.1. Liste des figures

- la figure 1 illustre un réseau de densité 1/2, correspondant à celui mis en oeuvre dans le cas de l'invention ;
- les figures 2A à 2E illustrent la modulation IOTA-$\pi$/4 de l'invention, selon les aspects suivants :

  . A : la fonction prototype x(t) ;
  . B : la transformée de Fourier en linéaire de la fonction prototype ;
  . C : le module de la fonction d'ambiguïté en linéaire (telle que définie dans l'annexe 2) ;

. D : la fonction d'intersymbole (telle que définie dans l'annexe 2) ;
. E : la décroissance du signal, en échelle logarithmique ;

- la figure 3 la fonction d'ambiguïté d'une fonction gaussienne ;
- la figure 4 est un schéma synoptique d'un émetteur (et du procédé d'émission correspondant) utilisable selon l'invention ;
- la figure 5 est un schéma synoptique d'un récepteur (et du procédé de réception correspondant) utilisable selon l'invention ;
- la figure 6 illustre plus précisément le procédé de démodulation mis en oeuvre dans le récepteur de la figure 5.

## 5.2. Principes généraux de l'invention

L'invention repose sur une approche tout à fait nouvelle des signaux multiporteuses du type OFDM/OQAM, construits sur des réseaux temps-fréquence non-orthogonaux de densité 2. Notamment, l'invention propose l'utilisation d'un réseau en quinconce, tel qu'illustré en figure 1, dans lequel seul les emplacements du réseau (définis par les indices m (dimension fréquentielle) et n (dimension temporelle)) tels que m+n soit pair sont utilisés.

En d'autres termes, l'enveloppe complexe d'un signal selon l'invention, utilisant cete répartition dans l'espace temps-fréquence, répond à l'équation suivante :

$$s(t) = \sum_{m+n\ pair} a_{m,n} x_{m,n}(t)$$

où :

$a_{m,n}$ est un coefficient réel représentatif du signal source, choisi dans un alphabet de modulation prédéterminé;
t représente le temps;
$x_{m,n}(t)$ est une fonction de base, translatée dans l'espace temps-fréquence d'une même fonction prototype x(t) prenant des valeurs réelles ou complexes, soit :

$$x_{m,n}(t) = e^{i\varphi_{m,n}} e^{i(2\pi m\upsilon_0 t+\varphi)} x(t - n\tau_0)$$

*avec* $\upsilon_0\tau_0 = 1/4$
avec

$$\varphi_{m,n} = (m+n+mn+(n^2-m^2)/2)\pi/2$$

où φ est un paramètre de phase arbitraire,
et où lesdites fonctions de base $\{x_{m,n}\}$ sont orthogonales entre elles, la partie réelle du produit scalaire de deux fonctions de base différentes étant nulle.

L'invention concerne également des modulations bien adaptées à de tels réseaux, et notamment la modulation IOTA-π/4.

## 5.3. La modulation IOTA-π/4

La modulation OFDM/IOTA résulte d'une approche totalement originale dans le domaine du traitement de signal que nous baptisons transformée IOTA (pour "Isotropic Orthogonal Transform Algorithm"), et décrite en annexe 3 et dans la demande de brevet FR-95 05455 déjà mentionnée.

La modulation IOTA-π/4 peut être obtenue par rotation de -π/4 de cette modulation OFDM/IOTA, ainsi que cela est décrit dans l'annexe 3.

### 5.3.1. Equation du signal

L'équation du signal, et la façon dont elle est obtenue, sont discutée en annexes 3 et 4.

5.3.2. Commentaires des figures et avantages liés à la décroissance rapide

Afin de mieux mettre en évidence, de façon visuelle, les avantages de l'invention, on présente pour la modulation IOTA-π/4 (figures 2A à 2E) :

- A : la fonction prototype x(t) ;
- B : la transformée de Fourier en linéaire de la fonction prototype ;
- C : le module de la fonction d'ambiguïté en linéaire (telle que définie dans l'annexe 2) ;
- D : la fonction d'intersymbole (telle que définie dans l'annexe 2).

La figure 2C permet de juger du confinement dans le plan temps-fréquence de la fonction prototype. La figure 2D de la fonction d'intersymbole permet d'apprécier la sensibilité d'une modulation au délai et au Doppler. Les erreurs de phase ne sont pas considérées, puisque toutes les modulations sont équivalentes sur ce plan.

On pourra comparer ces figures à celles présentées et commentées dans la demandes de brevet déjà citée, pour les autres modulations discutées dans la présente demande de brevet.

La modulation OFDM/IOTA-π/4. Celle-ci présente donc une décroissance rapide (au sens mathématique du terme) en temps et en fréquence, ce qui permet d'envisager l'égalisation dans les meilleurs conditions possibles. Elle présente par ailleurs une symétrie parfaite par rapport à ces deux axes. Sa fonction d'intersymbole est quasiment idéale. D'une manière générale son comportement se rapproche de celui de la gaussienne. Le paramètre $\xi$ vaut 0.9769.

On peut comparer la fonction d'ambiguïté de la fonction $\mathfrak{I}$ (figure 2C) à celle d'une gaussienne, telle qu'illustrée en figure 3. L'allure générale de ces deux fonctions est très similaire au niveau du sommet. Elles diffèrent par contre à la base.

La figure 2E montre en échelle logarithmique la décroissance en temps du signal IOTA-π/4. On observe que l'amplitude du signal décroît linéairement en échelle logarithmique (en temps et en fréquence, bien sûr, puisque les deux aspects sont identiques), soit de façon exponentielle en échelle linéaire. Cette propriété permet donc dans une réalisation pratique de tronquer la forme d'onde et de limiter ainsi la complexité du récepteur.

On notera encore que la décroissance de cette modulation est très rapide (linéaire en échelle logarithmique), avec un coefficientt supérieur de √2 à la modulation OFDM/IOTA.

5.4. Principe d'un émetteur

La figure 4 présente un synoptique simplifié d'un émetteur d'un signal selon l'invention. Le procédé d'émission s'en déduit directement.

On considère une source binaire à haut débit (typiquement quelques Mégabits/s ou dizaines de Mégabits/s). Par source binaire, on entend une série d'éléments de données correspondant à un ou plusieurs signaux 91 source de tous types (sons, images, données) numériques ou analogiques échantillonnés. Ces données binaires sont soumises à un codage canal 92 binaire à binaire adapté à des canaux évanouissants. On pourra par exemple utiliser un code en treillis (Trellis Coded Modulation), concaténé éventuellement avec un code de Reed-Solomon. Plus précisément, si l'on souhaite une efficacité spectrale de 4 bits/Hertz, on peut utiliser un code de rendement 2/3 associé à une modulation 8AM, prenant 8 niveaux d'amplitude.

Ensuite, conformément au principe exposés dans le brevet FR-88 15216, on répartit (93) ces données codées dans l'espace temps-fréquence de façon à apporter la diversité nécessaire, et à décorréler l'évanouissement (fading) de Rayleigh affectant les symboles émis.

Plus généralement, on effectue un premier codage binaire à binaire, un entrelacement en temps et en fréquence et un codage binaire à coefficients, communément appelé « mapping ». Il est clair que l'entrelacement peut être indifféremment effectué avant ou après le mapping, selon les besoins et les codes utilisés.

A l'issue de cette opération de codage, on dispose des symboles réels à émettre $a_{m,n}$. Le principe de réalisation du modulateur 94 OFDM/IOTA-π/4 est analogue à celui d'un émetteur OFDM/OQAM. On pourra se référer à [15] pour une description détaillée du système de modulation. Pour construire le signal à émettre, on regroupe les symboles de même rang n et l'on calcule:

$$s(t)=\sum_{m+n\ pair} a_{m,n}x_{m,n}(t)=\sum_{n}\sum_{m} a_{m,n}e^{i\varphi_{m,n}}e^{i(2\pi m\upsilon_0 t+\varphi)}x(t-n\tau_0) \qquad (30)$$

Cette opération peut être avantageusement réalisée sous forme numérique par une transformée de Fourier rapide (FFT) portant sur tous les symboles de même rang n (il est possible de réduire de moitié le nombre de points de la FFT, du fait de la décimation effectuée sur le réseau de l'invention), suivi d'une multiplication de la forme d'onde

résultante par la fonction prototype IOTA-π/4, et enfin d'une addition des symboles de rangs différents (sommation selon l'indice n).

Le signal complexe ainsi généré est alors converti sous forme analogique 98, puis transposé à la fréquence finale par un modulateur 99 à deux voies en quadrature (modulateur I&Q), et enfin amplifié 910 avant d'être émis 911.

5.5. Principe d'un récepteur

La figure 5 illustre de façon schématique un récepteur d'un signal selon l'invention (ainsi que le procédé de réception correspondant).

Le récepteur OFDM/IOTA-π/4 est sensiblement analogue à celui adapté à la modulation OFDM/OQAM. Les étages d'entrée sont conventionnels. Le signal est préamplifié 101, puis converti en fréquence intermédiaire 102 afin de réaliser le filtrage canal 103. Le signal en fréquence intermédiaire est ensuite converti en bande de base sur deux voies en quadrature 105. En outre, on réalise les fonctions de correction automatique de gain (CAG) 104, qui contrôle la préamplification 101.

Une autre solution consiste à transposer le signal en fréquence intermédiaire sur une fréquence porteuse basse, de façon à échantillonner le signal sur une seule voie, la représentation complexe étant alors obtenue par filtrage numérique. Alternativement, le signal RF peut être transposé directement en bande de base (conversion directe), le filtrage canal étant alors réalisé sur chacune des deux voies I&Q. Dans tous les cas, on peut se ramener à une représentation discrète du signal analytique correspondant au signal reçu.

Afin de détailler le traitement numérique en bande de base, nous considérerons une modulation de type multiporteuse caractérisée par l'équation de l'enveloppe complexe du signal émis:

$$s(t) = \sum_{m,n} a_{m,n} x_{m,n}(t) \qquad (31)$$

Soit un canal de transmission caractérisé par sa fonction de transfert variable T(f,t) (voir annexe 2). L'enveloppe complexe du signal reçu r(t) s'écrit:

$$r(t) = \int S(f) T(f,t) e^{2i\pi ft} df \qquad (32)$$

Le démodulateur estime (106) la fonction de transfert T(f,t) par des moyens classiques, qui peuvent par exemple utiliser un réseau de référence de porteuses explicites selon le brevet FR-90 01491. Pour démoduler le signal proprement dit (107), on assimile localement le canal à un canal multiplicatif caractérisé par une amplitude et une phase correspondant à la valeur de T(f,t) pour l'instant et la fréquence considérée. Pour estimer $a_{m,n}(t)$, le signal reçu est donc assimilé au signal:

$$\tilde{r}(t) = \int S(f) T(m\nu_0, n\tau_0) e^{2i\pi ft} df = T(m\nu_0, n\tau_0)\, s(t) \qquad (33)$$

On posera:

$$T(m\nu_0, n\tau_0) = \rho_{m,n} e^{i\theta_{m,n}} \qquad (34)$$

Le démodulateur effectue donc le traitement suivant:

$$\tilde{a}_{m,n} = \Re e \int r(t) e^{-i\theta_{m,n}} x^*_{m,n}(t) dt \qquad (35)$$

Dans le cas d'un canal stationnaire de fonction de transfert $\rho e^{i\theta}$, on retrouve évidemment:

$$\tilde{a}_{m,n} = \rho a_{m,n} \quad (36)$$

En pratique, le traitement 107 est effectué sous forme numérique, selon le procédé illustré en figure 6. Le récepteur fonctionne de façon analogue à un récepteur OFDM/OQAM [13-16]. Il effectue les traitements suivants:

- multiplication 111 dudit signal reçu r(t) par la fonction prototype x(t) 112;
- « repliement » 113 de la forme d'onde filtrée modulo $2\tau_0$ ;
- application 114 d'une transformée de Fourier (FFT) ;
- sélection des échantillons pour lesquels m+n est pair (éventuellement effectuée lors de l'application de la FFT) ;
- correction 115 de la phase $\theta_{m,n}$ en fonction de l'estimation du canal 116, comprenant par exemple une estimation $\rho_{m,n}$ de la réponse de l'amplitude et une estimation $\theta_{m,n}$ de la réponse de la phase du canal de transmission;
- correction 117 de la phase

$$e^{i\varphi_{m,n}};$$

- sélection 118 de la partie réelle, pondérée par la réponse de l'amplitude $\rho_{m,n}$.

Cet algorithme permet donc de calculer globalement tous les coefficients d'un indice n donné. L'ordre de grandeur de la complexité correspondante est approximativement le double de celle de l'algorithme utilisé pour l'OFDM/QAM.

Les coefficients ainsi obtenus sont ensuite désentrelacés 108, symétriquement à l'entrelacement mis en oeuvre à l'émission, puis décodés 109, avantageusement selon une technique de décodage à décision douce, mettant par exemple en oeuvre un algorithme du type de l'algorithme de Viterbi. Si le décodage de canal tient compte de l'estimation de la réponse de l'amplitude du canal $\rho_{m,n}$, les valeurs correspondantes sont également désentrelacées 110. Par ailleurs, le désentrelacement est bien sûr effectué avant ou après le mapping, selon le moment ou l'entrelacement a été mis en oeuvre à l'émission.

L'annexe 4 décrit de façon plus détaillée les opérations effectuées.

ANNEXE 1 : REFERENCES

[1] M.L. Doeltz, E.T. Heald and D.L. Martin, « Binary data transmission techniques for linear systems »
Proceedings of the IRE,
pp. 656-661, May 1957.

[2] R.R. Mosier, « A data transmission system using pulse phase modulation »
IRE Conv. Rec. Ist Nat'l Conv Military Electronics
(Washington, D.C., June 17-19, 1957) pp. 233-238.

[3] G.A. Franco and G. Lachs, « An orthogonal coding technique for communnications »
1961 IRE Internat'l Conv. Rec.,
vol. 9, pp. 126-133.

[4] H.F. Harmuth, « On the transmission of information by orthogonal time functions » AIEE Trans. (Communications and Electronics)
vol. 79, pp. 248-255, July 1960.

[5] S.B. Weinstein and Paul M. Ebert, « Data transmission by frequency-division multiplexing using the discrete Fourier transform »
IEEE Trans. Commun.,
vol. COM-19, pp. 628-634, Oct. 1971.

[6] L.J. Cimini, « Analysis and simulation of a digital mobile channel using orthogonal frequency division multiplexing, »
IEEE Trans. Commun.,
vol. COM-33, pp. 665-675, July 1985.

[7] E.F. Casas and C. Leung, « OFDM for data communication over mobile radio FM channels - Part I : Analysis and expérimental results, »

IEEE Trans. Commun.,
vol. 39, pp. 783-793, May 1991.
[8] E.F. Casas and C. Leung, « OFDM for data communication over mobile radio FM channels - Part II : Performance improvement, »
IEEE Trans. Commun.,
vol. 40, pp. 680-683, April 1992.
[9] I. Daubechies, « The wavelet transform, time-frequency localization and signal analysis, »
IEEE Trans. Inform. Theory,
vol. IT-36, pp. 961-1005, Sept. 1990.
[10] H.E. Jensen, T. Hoholdt, and J. Justesen, « Double series representation of bounded signals, »
IEEE Trans. Inform. Theory,
vol. IT-34, pp. 613-624, July 1988.
[11] R.W. Chang, « Synthesis of band-limited orthogonal signals for multi-channel data transmission, »
Bell Syst. tech. J.,
vol. 45, pp. 1775-1796, Dec. 1966.
[12] B.R. Saltzberg, « Performance of an efficient parallel data transmission system, » IEEE Trans. Commun. Technol.,
vol. COM-15, pp. 805-811, Dec. 1967.
[13] R.W. Chang, « A theorical study of performance of an orthogonal multiplexing data transmission scheme; »
IEEE Trans. Commun. Technol.,
vol. COM-16, pp. 529-540, Aug. 1968.
[14] B. Hirosaki, « An analysis of automatic equalizers for orthogonally multiplexed QAM systems, »
IEEE Trans. Commun.,
vol. COM-28, pp. 73-83, Jan. 1980.
[15] B. Hirosaki, « An orthogonally multiplexed QAM system using the discrete Fourier transform, »
IEEE Trans. Commun.,
vol. COM-29, pp. 982-989, July. 1981.
[16] B. Hirosaki, « A maximum likehood receiver for an orthogonally mulitplexed QAM system, »
IEEE Journal on Selected Areas in Commun.,
vol. SAC-22, pp. 757-764, Sept 1984.
[17] B. Hirosaki, S. Hasegawa, and A. Sabato, « Advanced group-band modem using orthogonally multiplexed QAM technique, »
IEEE Trans. Commun.,
vol. COM-34, pp. 587-592, June. 1986.
[18] John A. C. Bingham, « Multicarrier modulation for data transmission : An idea whose time has come, »
IEEE Communications Magazine,
pp. 5-14, May 1990.
[19] P.M. WOODWARD, « Probability and information theory with application to Radar, »
Pergamon Press,
London 1953.
[20] F. Amoroso and J. A. Kivett, « Simplified MSK signalling technique, » IEEE Trans. Commun.,
vol. COM-25, pp. 433-441, April 1977.
[21] P. A. Bello, « Characterization of randomly time-variant linear channels, » *IEEE Trans. Commun. Systems*. pp. 360-393, Dec. 1964.
[22] P.M. WOODWARD, « Probability and information theory with application to Radar ,»
*Pergamon Press,*
London 1953.
[23] M. ALARDet R. LASSALLE « Principes de modulation et de codage canal en radiodiffusion numérique vers les mobiles

*Revue de l'U.E.R,*
n° 224, août 1987, pp. 168-190.

**ANNEXE 2**

1. Modélisation du canal

1.1. Modèle général

On peut considérer un canal dispersif comme un système linéaire ayant une réponse impulsionnelle variable dans le temps. Il existe deux façons de définir cette réponse impulsionnelle. On s'inspirera largement des conventions proposées dans [21]:

- la réponse impulsionnelle à l'entrée (Input Delay Spread Function) g(t,τ) définie par:

$$r(t) = \int s(t-\tau)g(t,\tau)d\tau$$

  où s(t) et r(t) représentent respectivement les signaux émis et reçus
- la réponse impulsionnelle en sortie (Output Delay Spread Function) h(t,τ) définie par:

$$r(t) = \int s(t-\tau)h(t-\tau,\tau)d\tau$$

  On a évidemment $h(t,\tau) = g(t+\tau,\tau)\cdot$ h(t, τ) représente la réponse impulsionnelle du canal à l'instant t. Munis de ces conventions, nous pouvons définir les fonctions caractéristiques suivantes:

- la fonction d'étalement délai-Doppler U(τ,ν) (Delay-Doppler Spread Function) caractérisée par:

$$g(t,\tau) = \int U(\tau,\nu)e^{i2\pi\nu t}d\nu$$

  avec

$$r(t) = \iint U(\tau,\nu)s(t-\tau)e^{i2\pi\nu t}d\nu d\tau$$

- la fonction d'étalement Doppler-délai V(ν,τ) (Doppler-Delay Spread Function) caractérisée par:

$$h(t,\tau) = \int V(\nu,\tau)e^{-i2\pi\nu t}d\nu$$

  avec

$$r(t) = \iint V(\nu,\tau)s(t-\tau)e^{i2\pi\nu(t-\tau)}d\nu d\tau$$

  On a tout simplement:

$$V(\nu,\tau) = e^{i2\pi\nu\tau}U(\tau,\nu)$$

- la fonction de transfert variable (Time-Variant Transfert Function) T(f,t) caractérisée par:

$$T(f,t) = \int g(t,\tau)e^{-i2\pi f\tau}d\tau$$

avec

$$r(t) = \int S(f)T(f,t)e^{i2\pi f\tau}df$$

On retrouve donc la même équation que dans le cas d'un canal stationnaire, la différence étant simplement que la fonction de transfert devient variable dans le temps. Cette fonction de transfert T(f,t) est la transformée de Fourier bidimensionnelle de U(τ,ν), soit:

$$T(f,t) = \iint U(\tau,\nu)e^{-i2\pi f\tau}e^{i2\pi\nu t}d\tau d\nu$$

Dans tous les cas, nous considérerons que U(τ,ν) est à support borné, ce qui permet de représenter la fonction de transfert T(f,t) par un réseau de valeurs discrètes en vertu du théorème d'échantillonnage.

1.2. Le modèle délai-Doppler statique

Le modèle délai-Doppler est défini par l'équation:

$$r(t) = \iint U(\tau,\nu)s(t-\tau)e^{i2\pi\nu t}d\tau d\nu$$

Cette équation fait apparaître le canal comme une somme de canaux élémentaires caractérisés par une amplitude, une phase, un offset temporel et un offset fréquentiel. Aussi est-il légitime de s'intéresser au comportement des différentes modulations en présence de ce type de canal, que nous baptiseront délai-Doppler statique.

L'équation du canal s'écrit alors sous la forme simplifiée suivante:

$$r(t) = Ae^{i\theta}s(t-\tau)e^{i2\pi\nu t}$$

**2. Performances de l'OFDM dans les canaux non-stationnaires**

2.1. Cas général

Considérons une modulation multiporteuse OFDM de type quelconque (OFDM/QAM, OFDM/OQAM ou OFDM/IOTA) caractérisée par l'équation générique:

$$s(t) = \sum_{k \in E} a_k x_k(t)$$

$a_k$ étant des variables réelles, E étant un réseau bidimensionnel de densité 2 dans l'espace temps-fréquence, les fonctions $x_k(t)$ étant des translatées en temps et en fréquence d'une même fonction prototype x(t), et qui constituent une base hilbertienne de $L^2(R)$.

$$x_k(t) = e^{i\varphi_k}x(t-\tau_k)e^{2i\pi\nu_k t} \quad ,k \in E$$

On notera qu'aucune hypothèse n'est faite sur la structure du réseau E. Dans le cas particulier de l'OFDM/QAM, ce réseau se décompose en deux sous-réseaux co-localisés avec des phases en quadrature.

L'opération de démodulation s'écrit:

$$\hat{a}_n = \Re e\left[e^{-i\phi}\int r(t)x_n^*(t)dt\right]$$

$\phi$ étant une phase estimée par le démodulateur et r(t) le signal reçu. On peut donc écrire:

$$\hat{a}_n = \Re e\left[e^{-i\phi}\int\left[\iint U(\tau,\nu)s(t-\tau)e^{i2\pi\nu t}d\tau d\nu\right]x_n^*(t)dt\right]$$
$$= \Re e\left[e^{-i\phi}\iint U(\tau,\nu)\left[\int s(t-\tau)e^{i2\pi\nu t}x_n^*(t)dt\right]d\tau d\nu\right]$$

Or:

$$\int s(t-\tau)e^{i2\pi\nu t}x_n^*(t)dt = \sum_k a_k\int x_k(t-\tau)e^{i2\pi\nu t}x_n^*(t)dt$$
$$= \sum_k a_k e^{i(\varphi_k-\varphi_n)}e^{2i\pi(\nu+\nu_k-\nu_n)(\tau+\tau_k+\tau_n)}A_x(\tau_n-\tau_k-\tau,\nu_n-\nu_k-\nu)$$

On en déduit que:

$$\hat{a}_n = \sum_k a_k\Re e\left[e^{-i\phi}e^{i(\varphi_k-\varphi_n)}\iint e^{2i\pi(\nu+\nu_k-\nu_n)(\tau+\tau_k+\tau_n)}U(\tau,\nu)A_x(\tau_n-\tau_k-\tau,\nu_n-\nu_k-\nu)d\tau d\nu\right]$$

La valeur optimale de $\phi$ est celle qui maximise $\hat{a}_n$, soit:

$$\phi = Arg\iint e^{2i\pi\nu\tau}U(\tau,\nu)A(-\tau,-\nu)d\tau d\nu$$

Bien que générales, les équations ci-dessus ne sont guère manipulables. Elles montrent cependant que le signal utile et l'intersymbole apparaissent comme des intégrations de la fonction d'ambiguïté pondérée par la fonction d'étalement délai-Doppler.

2.2. Cas du canal statique

Si l'on s'intéresse à un canal de type délai-Doppler statique, caractérisé par une phase $\theta$, un retard $\xi$ et un offset $\nu$ (on normalisera à 1 l'amplitude A), on effectue la démodulation de manière similaire en introduisant dans l'estimateur un paramètre de phase $\phi$. Le résultat de cette opération s'écrit:

$$\hat{a}_n = \Re e\left[\int r(t)x_n^*(t)e^{-i\phi}dt\right] = \Re e\left[e^{i\theta-\phi}\int s(t-\tau)e^{2i\pi\nu t}x_n^*(t)dt\right]$$
$$= \sum_{k\in E}a_k\Re e\left[\int e^{i(\theta-\phi)}x_k(t-\tau)e^{2i\pi\nu t}x_n^*(t)dt\right] = \sum_{k\in E}a_k\Re e\left[\int e^{i(\phi-\theta)}e^{-2i\pi\nu(t+\tau)}x_n(t+\tau)x_k^*(t)dt\right]$$
$$= \sum_{k\in E}a_k c_k \text{, avec } c_k = \Re e\left[\int e^{i(\phi-\theta)}e^{-2i\pi\nu(t+\tau)}x_n(t+\tau)x_k^*(t)dt\right]$$

Le signal démodulé s'écrit donc finalement:

$$\hat{a}_n = c_n a_n + \sum_{k\in E,k\neq n}c_k a_k$$

Le deuxième terme représente l'interférence entre symboles (IES). Si l'on considère les données $a_k$ comme

des variables aléatoires indépendantes de variance $\sigma^2$, la variance I de l'IES s'écrit:

$$I = \sum_{k \in E, k \neq n} c_k^2 \sigma^2$$

Or les coefficients $c_k$ sont les coefficients de la décomposition de la fonction $e^{i(\phi-\theta)}e^{-2i\pi\nu(t+\tau)}x_n(t+\tau)$, de norme unité, sur la base hilbertienne des fonctions $x_k(t)$. On a donc:

$$\sum_{k \in E} c_k^2 = 1 \text{ et } I = (1 - c_n^2)\sigma^2$$

En d'autres termes, la variance du signal reçu est constante et se répartit entre le signal "utile" $c_n a_n$ et l'intersymbole, de variance $I=(1-c_n^2)\sigma^2$. Le calcul du coefficient $c_n$ donne:

$$c_n = \Re e\left[\int e^{i(\phi-\theta)} e^{-2i\pi\nu(t+\tau)} x_n(t+\tau) x_n^*(t) dt\right] =$$
$$\Re e\left[e^{i(\phi-\theta-\pi\nu\tau)} \int e^{-2i\pi\nu t} x_n(t+\tau/2) x_n^*(t-\tau/2) dt\right] = \Re e\left[e^{i(\phi-\theta-\pi\nu\tau)} A_{x_n}(\tau,\nu)\right]$$

où $A_{xn}(\tau,\nu)$ représente la fonction d'ambiguïté de $x_n$ (voir également annexe 3), soit :

$$A_{x_n}(\tau,\nu) = e^{2i\pi(\nu_n\tau-\tau_n\nu)} A_x(\tau,\nu)$$

Finalement, on peut écrire:

$$c_n = \Re e\left[e^{i(\phi-\theta-\pi\nu\tau)} e^{2i\pi(\nu_n\tau-\tau_n\nu)} A_x(\tau,\nu)\right]$$

On considérera que la phase de démodulation $\phi$ s'écrit sous la forme $\phi_{opi} + \Delta\phi$, où $\phi_{opt}$ est la phase de démodulation qui minimise l'IES, c'est-à-dire qui maximise $c_n$, soit:

$$\phi_{opt} = \theta + \pi\nu\tau + 2\pi(\tau_n\nu - \nu_n\tau)$$

Alors, la variance de l'IES s'écrit simplement:

$$I = (1 - (\Re e\left[A_x(\tau,\nu)e^{i\Delta\phi}\right])^2)\sigma^2$$

Lorsque la fonction prototype est paire, (ce qui correspond au cas de la méthode de construction de bases hilbeniennes décrite dans le texte principal), la fonction d'ambiguïté est réelle, et on a donc:

$$I = (1 - A_x^2(\tau,\nu)\cos^2 \Delta\phi))\sigma^2$$

Ce résultat est tout à fait remarquable, puisqu'il démontre que la sensibilité au délai et au Doppler de toute modulation multiporteuse ne dépend que de la fonction d'ambiguïté de sa fonction prototype. On appellera par la suite fonction d'intersymbole (par abus de langage, pour fonction d'interférence entre symboles) normalisée la fonction $Is(\tau,\nu) = \sqrt{1-A_x^2(\tau,\nu)}$ dans le cas général), qui représente la valeur quadratique moyenne de l'intersymbole normalisée par la valeur quadratique moyenne des données dans le cas d'une estimation de phase optimale.

## 3. Analyse comparative des différents types d'OFDM

### 3.1. Limites théoriques

Nous nous intéressons ci-après aux propriétés de la fonction d'intersymbole normalisée. On constate que la sensibilité d'une modulation multiporteuse est directement liée au comportement de la fonction d'ambiguïté de la fonction prototype correspondante au voisinage de (0,0). Le problème posé est tout à fait analogue aux problèmes d'incertitude rencontrés dans le domaine radar, et on pourra se référer à la littérature abondante sur le sujet (voir par exemple [22]). Sans perte de généralité, on peut choisir la fonction x(t), par une translation temporelle et fréquentielle adéquate, de telle sorte que ses moments d'ordre un soient nuls, soit:

$$\int t|x(t)|^2\, dt = \int f|X(f)|^2\, df = 0$$

Dans ces conditions, on vérifie aisément que les dérivées partielles du premier ordre s'annulent:

$$\frac{\partial A_x}{\partial \nu}(\tau,\nu) = -2i\pi\int e^{-2i\pi\nu\tau}\, t\, x(t+\tau/2)x^*(t-\tau/2)\,dt \Rightarrow$$

$$\frac{\partial A_x}{\partial \nu}(0,0) = -2i\pi\int t|x(t)|^2\, dt = 0$$

$$\frac{\partial A_x}{\partial \tau}(\tau,\nu) = -2i\pi\int e^{-2i\pi f\tau} f X(f+\nu/2)X^*(f-\nu/2)\,df \Rightarrow$$

$$\frac{\partial A_x}{\partial \tau}(0,0) = -2i\pi\int f|X(f)|^2\, df = 0$$

On peut caractériser le comportement de la fonction d'ambiguïté autour de (0,0) à partir des dérivées partielles de second ordre:

$$\frac{\partial^2 A_x}{\partial\tau\partial\nu}(\tau,\nu) = -i\pi\int t\, e^{-2i\pi\nu t}\left(x'(t+\tau/2)x^*(t-\tau/2) - x(t+\tau/2)x'^*(t-\tau/2)\right)dt \quad \Rightarrow$$

$$\frac{\partial^2 A_x}{\partial\tau\partial\nu}(0,0) = 2\pi\int t\, \Im m\left[x'(t)x^*(t)\right]dt$$

On posera

$$\frac{\partial^2 A_x}{\partial\tau\partial\nu}(0,0) = \mu_x$$

$$\frac{\partial^2 A_x}{\partial \nu^2}(\tau,\nu) = -4\pi^2\int e^{-2i\pi\nu\tau} t^2\, x(t+\tau/2)x^*(t-\tau/2)\,dt \Rightarrow$$

$$\frac{\partial^2 A_x}{\partial \nu^2}(0,0) = -4\pi^2\int t^2\, |x(t)|^2\, dt = -4\pi^2\Delta t^2$$

$$\frac{\partial^2 A_x}{\partial \tau^2}(\tau,\nu) = -4\pi^2\int e^{-2i\pi f\tau} f^2 X(f+\nu/2)X^*(f+\nu/2)\,df \Rightarrow$$

$$\frac{\partial^2 A_x}{\partial \tau^2}(0,0) = -4\pi^2 \int f^2 |X(f)|^2 \, df = -4\pi^2 \Delta f^2$$

Considérons le développement de Taylor-Young de la fonction d'ambiguïté en (0,0):

$$A_x(d\tau, d\nu) = 1 - 2\pi^2(\Delta t^2 d\nu^2 + \Delta f^2 d\tau^2) + \mu d\nu d\tau + o(d\nu^2 + d\tau^2)$$

On en déduit le développement de Taylor-Young de la variance de l'intersymbole

$$I = (1 - (\Re e[A_x(\tau, \nu)])^2 \cos^2 \Delta\phi)\sigma^2,$$

soit:

$$I(d\tau, d\nu, d\phi) = \sigma^2 \left[4\pi^2(\Delta t^2 d\nu^2 + \Delta f^2 d\tau^2) - 2\mu d\nu d\tau + d\phi^2 \quad + o(d\nu^2 + d\tau^2 + d\phi^2)\right]$$

On en déduit que la fonction d'intersymbole Is admet à l'origine un cône tangent d'équation:

$$z = \sqrt{4\pi^2(\Delta t^2 \nu^2 + \Delta f^2 \tau^2) - 2\mu\nu\tau}$$

L'intersection de ce cône avec le plan z = 1 (intersymbole maximum) délimite une surface de contour elliptique dont l'aire $\xi$ peut être considérée comme une mesure de la sensibilité au délai et au Doppler. Lorsque $\mu_x$ est nul, cette ellipse a pour axes de symétrie les axes temporel et fréquentiel, et s'étend de $\pm 1/2\pi\Delta f$ selon l'axe temporel et $\pm 1/2\pi\Delta t$ selon l'axe fréquentiel. On a donc:

$$\xi = 1/4\pi\Delta t\Delta f$$

En vertu de l'inégalité de Heisenberg, $\xi$ ne peut pas dépasser l'unité. Ce résultat se généralise au cas où $\mu_x$ est différent de 0. Considérons la fonction y(t) obtenue en multipliant la fonction x(t) par une wobulation:

$$y(t) = e^{i\pi\beta t^2} x(t) \quad \Rightarrow \quad y'(t) = e^{i\pi\beta t^2}(x'(t) + 2i\pi\beta t \, x(t))$$

On peut donc écrire:

$$\mu_y = \frac{\partial^2 A_y}{\partial\tau\partial\nu}(0,0) = 2\pi \int t \, \Im m[y'(t) y^*(t)] dt$$
$$= 2\pi \int t \, \Im m[x'(t) x^*(t)] dt + 4\pi^2 \beta \int t^2 |x(t)|^2 dt = \mu_x + 4\pi^2 \beta \Delta t^2$$

Il est donc toujours possible d'annuler $\mu_y$ en choisissant $\beta$ de façon appropriée. Or l'opération de multiplication par une wobulation réalise un simple changement d'axes de la fonction d'ambiguïté associée, avec conservation des aires. On en déduit le paramètre $\xi$ est donc toujours compris entre 0 et 1.

Ce résultat est extrêmement important, puisqu'il permet de comparer les performances de toutes les MCM dans des canaux dispersifs à partir d'un paramètre unique. On constate donc que ces performances ne dépendent que de la concentration de la fonction prototype associée. L'optimum est atteint virtuellement par la gaussienne, mais cet optimum est inaccessible, puisque les gaussiennes ne permettent pas de construire une base hilbertienne.

3.2. Le cas particulier de l'OFDM avec intervalle de garde

Les modulations OFDM construites à partir d'un réseau de densité l'constituent un cas dégénéré: en raison du théorème de Balian-Low-Coifman-Semmes, le paramètre $\xi$ est alors nul. Ce résultat est d'ailleurs totalement général, et s'applique quel que soit la structure du réseau des barycentres des fonctions de base. En effet, on peut toujours, à partir des opérateurs de wobulation temporelle, de transformée de Fourier et d'homothétie, se ramener à une structure orthogonale quelconque, pour laquelle le théorème de Balian-Low-Coifman-Semmes s'applique. Or ces trois opérateurs ne réalisent que des changements d'axes de la fonction d'ambiguïté, avec conservation des aires. On en déduit que le paramètre $\xi$ est nul pour toutes les modulations de ce type. La modulation OFDM/QAM n'échappe pas à cette règle. Dans ce cas, le paramètre $\Delta f$ est infini, ce qui conduit à une très forte sensibilité aux décalages temporels (la fonction d'intersymbole présente une tangente verticale selon l'axe temporel). Cependant, l'OFDM/QAM dispose d'un "joker" dont ne dispose aucun autre type d'OFDM, et qui réside dans le fait que l'on retrouve à l'intérieur d'un symbole prolongé par un intervalle de garde une infinité de version translatées du symbole initial. Ce caractère unique fait que l'OFDM/QAM est réellement un point singulier dans l'ensemble des MCM complexes. L'intervalle de garde crée une plage de non-intersymbole qui permet artificiellement de transformer le cône tangent à la fonction d'intersymbole (en l'occurrence totalement aplati dans le sens temporel, en un prisme dont l'intersection avec le plan z = 1 est un rectangle non dégénéré, c'est à dire dont l'aire est non-nulle. On pourra se reporter à la figure 3 pour mieux comprendre l'effet de l'intervalle de garde. Naturellement, l'utilisation d'un intervalle de garde fait que nous sortons du cadre des démonstrations précédentes, et que la limitation à l'unité de cette aire ne s'applique plus. Par contre on peut comparer l'OFDM avec intervalle de garde à une modulation MCM optimale virtuelle (avec $\xi$ = 1), et se demander quel intervalle de garde permet de retrouver un $\xi$ apparent identique. Considérons une modulation OFDM construite à partir de la fonction prototype x(t):

$$x(t) = \begin{cases} \dfrac{1}{\sqrt{\tau_0}} & \text{si } |t| \leq \tau_0/2 \\ 0 & \text{ailleurs} \end{cases}$$

On vérifie immédiatement que $\Delta t^2 = \tau_0^2/12$. Par conséquent, l'intersection du prisme tangent à la fonction d'intersymbole avec le plan z = 1 est limité dans le sens fréquentiel à $\pm\sqrt{3}/\pi\tau_0$. Admettons que l'on cherche à limiter à -10 dB le niveau d'intersymbole. Pour une modulation optimale, avec $\xi$ = 1, l'aire de la zone d'intersymbole inférieure à -10 dB est de l'ordre de 0.1. Pour obtenir un résultat équivalent avec une modulation OFDM avec intervalle de garde, il faut que l'intervalle de garde $\Delta\tau$ soit tel que $\Delta\tau \times (2\sqrt{3}/\pi\tau_0)/\sqrt{10} = 0.1$, soit $\Delta\tau = 0.287\ \tau_0$. Cette valeur est tout à fait considérable et illustre bien le prix qu'il faut payer pour faire fonctionner un système OFDM dans des conditions défavorables de délai et de Doppler.

**ANNEXE 3**

**1. Introduction**

Cette annexe donne l'ensemble des démonstrations qui attestent de l'existence de transformées temps-fréquence symétriques vis-à-vis des axes temporel et fréquentiel. En ce sens, ces transformées présentent une forte analogie avec la transformée de Gabor, qui est caractérisée par une parfaite isotropie dans toutes les directions du plan temps-fréquence. Bien que l'isotropie de ces nouvelles transformées ne soit qu'approximative, nous les qualifieront d'isotropes par abus de langage. La différence essentielle par rapport à la transformée de Gabor est que ces transformées sont strictement orthogonales, qui permet d'envisager leur application au domaine des transmissions numériques. En effet, l'orthogonalité de la transformée garantit la conservation des métriques euclidiennes, ce qui constitue une propriété essentielle dans un canal comportant du bruit additif gaussien.

Les systèmes de modulation résultant de cette approche utilisant des algorithmes de transformée orthogonale isotrope (Isotropie Orthogonal Transfornt Algorithms), nous les avons baptisés systèmes de modulation "IOTA".

**2. Fonction d'ambiguïté**

Les études sur la fonction d'ambiguïté ont été par le passé largement motivée par les développement des techniques Radar. Ce chapitre rappelle les principales propriétés de cette fonction, et décrit différents opérateurs agissant sur cette fonction.

2.1. Rappels sur la fonction d'ambiguïté

2.1.1. Définitions

Soit une fonction x(t) et sa transformée de Fourier X(f). On peut lui associer ses produits temporel et fréquentiel définis respectivement par:

$$\begin{cases}\gamma_x(t,\tau) = x(t+\tau/2)\,x^*(t-\tau/2)\\ \Gamma_x(f,\nu) = X(f+\nu/2)\,X^*(f-\nu/2)\end{cases}$$

La transformée de Wigner-Ville et la fonction d'ambiguïté de x sont alors données par:

$$\begin{cases}W_x(t,f) = \int \gamma_x(t,\tau)e^{-2i\pi f\tau}d\tau = \int \Gamma_x(f,\nu)e^{2i\pi\nu t}d\nu\\ A_x(\tau,\nu) = \int \gamma_x(t,\tau)e^{-2i\pi\nu t}dt = \int \Gamma_x(f,\nu)e^{2i\pi f\tau}df\end{cases}$$

2.1.2. Propriétés de symétrie de la fonction d'ambiguïté

Soit une fonction x(t). On notera respectivement par $x^-$ et $\tilde{x}$ les fonctions définies de la manière suivante:

$$\begin{cases}x^-(t) = x(-t)\\ \tilde{x}(t) = x^*(-t)\end{cases}$$

On a alors les relations:

$$A_{x^-}(\tau,\nu) = \int e^{-2i\pi\nu t}x^-(t+\tau/2)\,\tilde{x}(t-\tau/2)dt = \int e^{-2i\pi\nu t}x(-t-\tau/2)\,x^*(-t+\tau/$$

soit, en posant u = -t:

$$A_{x^-}(\tau,\nu) = \int e^{2i\pi\nu u}x(u-\tau/2)x^*(u+\tau/2)du = A_x(-\tau,-\nu) = A_x^*(\tau,\nu)$$

On en conclut en particulier que si une fonction x est paire, c'est à dire que $x = x^-$, sa fonction d'ambiguïté est réelle. Par ailleurs, on notera la relation suivante:

$$A_{x_*}(\tau,\nu) = \int e^{-2i\pi\nu t}x^*(u+\tau/2)x(u-\tau/2)du = A_x(-\tau,\nu)$$

En combinant ces deux relations, on obtient:

$$A_X(\tau,\nu) = A_x(\tau,-\nu)$$

2.1.3. Fonction d'ambiguïté et transformée de Fourier

On peut réécrire la définition de la fonction d'ambiguïté de la façon suivante:

$$A_x(\tau,\nu) = \int \Gamma_x(f,\nu)e^{2i\pi ft}df = \int \gamma_x(f, \nu)e^{2i\pi ft}df = A_x(\nu,-\tau)$$

ou encore $A_x(\tau, \nu) = A_x(-\nu, \tau)$

2.1.4. Fonction d'ambiguïté et translation temps fréquence

Considérons une fonction translatée d'une fonction prototype x(t) quelconque, soit:

$$x_k = e^{i\varphi_k} e^{2i\pi\nu_k t} x(t-\tau_k)$$

La fonction d'ambiguïté associée s'écrit:

$$A_{x_k}(\tau,\nu) = \int e^{-2i\pi\nu t} e^{i\varphi_k} e^{2i\pi\nu_k(t+\tau/2)} x(t-\tau_k+\tau/2) e^{-i\varphi_k} e^{-2i\pi\nu_k(t-\tau/2)} x^*(t-\tau_k-\tau/2)$$
$$\int e^{-2i\pi\nu t} e^{2i\pi\nu_k \tau} x(t-\tau_k+\tau/2) x^*(t-\tau_k-\tau/2)dt$$

soit, en posant $u = t - \tau_k$:

$$A_{x_k}(\tau,\nu) = e^{2i\pi(\nu_k\tau-\nu\tau_k)} \int e^{-2i\pi\nu u} x(u+\tau/2)x^*(u-\tau/2)du = e^{2i\pi(\nu_k\tau-\nu\tau_k)} A_x(\tau,\nu)$$

2.2. Orthogonalité et fonction d'ambiguïté

2.2.1. Cas général

On considère deux fonctions translatées d'une même fonction x(t), soit:

$$x_k = e^{i\varphi_k} e^{2i\pi\nu_k t} x(t-\tau_k)$$

$$x_{k'} = e^{i\varphi_{k'}} e^{2i\pi\nu_{k'} t} x(t-\tau_{k'})$$

Le produit scalaire de ces deux fonctions s'écrit:

$$\langle x_k | x_{k'} \rangle = e^{i(\varphi_k-\varphi_{k'})} \int e^{2i\pi(\nu_k-\nu_{k'})t} x(t-\tau_k) x^*(t-\tau_{k'})dt$$

soit, en posant $u = t - (\tau_k + \tau_{k'})/2$:

$$\langle x_k | x_{k'} \rangle = e^{i(\varphi_k-\varphi_{k'})} e^{2i\pi(\nu_k-\nu_{k'})(\tau_k+\tau_{k'})} \int e^{2i\pi(\nu_k-\nu_{k'})u} x(u+(\tau_{k'}-\tau_k)/2) x^*(u-(\tau_{k'}$$
$$e^{i(\varphi_k-\varphi_{k'})} e^{2i\pi(\nu_k-\nu_{k'})(\tau_k+\tau_{k'})} A_x(\tau_{k'}-\tau_k, \nu_{k'}-\nu_k)$$

## 3. Bases hilbertiennes sur des réseaux orthogonaux

### 3.1. Principes généraux de construction

On considère un ensemble de fonctions $\{x_{m,n}\}$ défini par:

$$x_{m,n}(t) = e^{i(m+n)\pi/2} e^{2i\pi m\nu_0 t} x(t - n\tau_0) \quad \text{avec } \nu_0\tau_0 = 1/2$$

On cherche les conditions sur x(t) pour que cet ensemble $\{x_{m,n}\}$ constitue une base hilbertienne de $H_R$. On imposera que x(t) soit une fonction paire, dont la fonction d'ambiguïté $A_x$ est donc réelle.

Le produit scalaire dans R de $x_{m,n}$ et de $x_{m',n'}$ peut s'écrire :

$$\langle x_{m,n} | x_{m',n'} \rangle_R = \Re e\left[ e^{i(m+n-m'-n')\pi/2} e^{i\pi(m-m')(n+n')\nu_0\tau_0} A_x((n'-n)\tau_0,(m'-m)\nu_0) \right]$$
$$= \Re e\left[ e^{i((m-m')+(n-n')+(m-m')(n+n'))\pi/2} A_x((n'-n)\tau_0,(m'-m)\nu_0) \right]$$

On notera la relation de congruence modulo 2:

$$(m - m') + (n - n') + (m - m')(n + n') \equiv 1 - (m - m' + 1)(n - n' + 1)$$

Par conséquent, si (m,n) ≠ (m',n') modulo 2, le produit scalaire est nul. Le réseau $\{x_{m,n}\}$ peut donc se décomposer en quatre sous-réseaux caractérisés par: {m pair, n pair},{m pair, n impair},{m impair n pair},{m impair, n impair}. L'orthogonalité entre fonctions appartenant à des sous-réseaux différents est donc automatique, et ne dépend pas des propriétés de la fonction prototype, dès l'instant où celle-ci est paire.

Il reste ensuite à garantir que les fonctions d'un même sous-réseau soient orthogonales entre elles. Il suffit pour cela que la fonction d'ambiguïté $A_x$ vérifie:

$$A_x(2n\tau_0, 2m\nu_0) = 0 \quad \forall (m, n) \neq (0, 0)$$

On constate donc que le problème de la construction de bases hilbertiennes de $H_R$ sur un réseau orthogonal de densité 2 se ramène à celui de la construction d'une fonction prototype paire dont la fonction d'ambiguïté s'annule sur un réseau de densité 1/2.

### 3.2. Méthodes d'orthogonalisation

#### 3.2.1. Orthogonalisation temporelle

Définition:

Soit une fonction x(t) de transformée de Fourier X(f). On appelle $O_t$ l'opérateur d'orthogonalisation temporelle qui associe à x(t) une fonction y(t) définie par sa transformée de Fourier Y(f):

$$Y(f) = \frac{X(f)}{\sqrt{\nu_0 \sum_k \| X(f - k\nu_0) \|^2}}$$

Par construction, on a:

$$\nu_0 \sum_m \|Y(f - m\nu_0\|^2 = \nu_0 \sum_m \Gamma_y(f - m\nu_0, 0) =$$

soit, par transformée de Fourier inverse:

$$\left[\sum_n \delta(\tau - 2n\tau_0)\right] A_y(\tau, 0) = \delta(\tau) \quad \text{avec } \nu_0\tau_0 =$$

soit encore

$$A_y(2n\tau_0,0) = 0 \ \forall n \neq 0 \text{ et } A_y(0,0) = 1$$

On réalise donc bien l'orthogonalisation sur l'axe temporel.

Soit x une fonction gaussienne et $y = O_t x$. Considérons l'expression:

$$\Gamma_y(f, 2m\nu_0) = Y(f + m\nu_0)Y^*(f - m\nu_0) = \frac{X(f + m\nu_0)X^*(f - m\nu_0)}{\nu_0 \sum_k \|X(f - k\nu_0)\|^2}$$

Puisque X est une gaussienne, on peut écrire:

$$X(f + m\nu_0)X^*(f - m\nu_0) = c_m \|X(f)\|^2$$

où $c_m$ est une constante. On en déduit que:

$$\Gamma_y(f,2m\nu_0) = c_m\Gamma_y(f,0)$$

Par transformée de Fourier inverse, on obtient:

$$A_y(\tau,2m\nu_0) = c_m A_y(\tau,0)$$

Par conséquent:

$$\forall m,\ \forall n \neq 0\ A_y(2n\tau_0,2m\nu_0) = 0$$

L'opérateur d'orthogonalisation temporelle $O_t$ orthogonalise donc l'ensemble du réseau, à l'exception de l'axe des fréquences.

Théorème 1

Soit x une fonction gaussienne et $y = O_t x$ , alors:

$$\forall m,\ \forall n \neq 0\ A_y(2n\tau_0,2m\nu_0) = 0$$

3.2.2. Orthogonalisation fréquentielle

Définition

Soit une fonction x(t). On appelle $O_f$ l'opérateur d'orthogonalisation fréquentielle qui associe à x(t) une fonction y(t) définie par:

$$y(t) = \frac{x(t)}{\sqrt{\tau_0 \sum_k \|x(t - k\tau_0\|^2}}$$

Par construction, on a:

$$\tau_0 \sum_n \|y(t - n\tau_0)\|^2 = \tau_0 \sum_n \gamma_y(t - n\tau_0,\ 0) =$$

soit, par transformée de Fourier:

$$\left[\sum_m \delta(\nu - 2m\nu_0)\right] A_y(0, \nu) = \delta(\nu) \quad \text{avec } \nu_0\tau_0 = 1/2$$

soit encore

$$A_y(0, 2m\nu_0)=0\ \forall\ m \neq 0 \text{ et } A_y(0,0) =$$

On réalise donc bien l'orthogonalisation sur l'axe fréquentiel.

Soit x une fonction gaussienne et z = $O_f$y, avec y = $O_t$x. Considérons l'expression:

$$\gamma_z(t, 2n\tau_0) = z(t + n\tau_0)\, z^*(t - n\tau_0) = \frac{y(t + n\tau_0) y^*(t - n\tau_0)}{\tau_0 \sum_k \|y(t - k\tau_0)\|^2}$$

On peut donc écrire:

$$\gamma_z(t,2n\tau_0) = \gamma_y(t,2n\tau_0)P(t)$$

où P(t) est une fonction périodique de période $\tau_0$, qui admet un développement en série de Fourier du type

$$\sum a_k e^{4i\pi k\nu_0 t}$$

Par transformée de Fourier, on obtient:

$$A_z(2n\tau_0, \nu) = \sum_k a_k A_y(2n\tau_0, \nu - 2k\nu_0)$$

Or

$$\forall m,\ \forall n \neq 0,\ A_y(2n\tau_0, 2m\nu_0) = 0 \Rightarrow$$

$$\forall m,\ \forall n \neq 0,\ A_x(2n\tau_0, 2m\nu_0) = 0$$

De plus, par construction,

$$\forall m \neq 0,\ A_z(0, 2m\nu_0) = 0$$

On a donc finalement:

$$\forall (m, n) \neq (0, 0), \quad A_z(2n\tau_0, 2m\nu_0) = 0$$

Ainsi, la fonction d'ambiguïté de z s'annule en dehors de (0,0) pour tous les multiples de $2\tau_0$ et de $2\nu_0$, soit un réseau de densité 1/2.

Théorème 2

Soit x une fonction gaussienne et $z = O_f O_t x$ , alors:

$$\forall (m, n) \neq (0, 0),\ A_z(2n\tau_0, 2m\nu_0) = 0$$

3.3. L'opérateur d'orthogonalisation O

Au vu de ce qui précède; il apparaît clairement qu'il existe une échelle temps-fréquence qui symétrise l'écriture des équations: Il suffit pour cela de choisir $\tau_0 = \nu_0 = 1 / \sqrt{2}$. On renormalisera donc les échelles en conséquence, sans que cela nuise à la généralité des démonstrations.

3.3.1. Définition

On appelle O l'opérateur d'orthogonalisation qui associe à une fonction x la fonction y définie par:

$$y(u) = \frac{2^{1/4} x(u)}{\sqrt{\sum_k \left\| x(u - k / \sqrt{2}) \right\|^2}}$$

En outre, on appellera par la suite F l'opérateur de transformée de Fourier.

3.3.2. Idempotence de l'opérateur O

Soit z = Oy et y = Ox. On peut écrire:

$$z(u) = \frac{2^{1/4} y(u)}{\sqrt{\sum_k \left\| y(u - k/\sqrt{2}) \right\|^2}} = \frac{2^{1/4} y(u)}{\sqrt{\sum_k \left\| \frac{2^{1/4} x(u - k/\sqrt{2})}{\sqrt{\sum_{k'} \left\| x(u - (k+k')/\sqrt{2}) \right\|^2}} \right\|^2}} = y(\nu)$$

On a donc OOx = Ox, ce qui démontre l'idempotence de l'opérateur O.

De la même façon, l'opérateur dual $F^{-1}OF$ est également idempotent, puisque $F^{-1}OFF^{-1}OF = F^{-1}OOF = F^{-1}OF$.

3.3.3. Lemme 1

Soit P une fonction périodique de période / √2 et D une distribution de la forme:

$$D(u) = \sum_k a_k \delta(u - k\sqrt{2})$$

Soit x une fonction quelconque:

$$[D * (P\,x)](u) = \sum_k a_k P(u - k\sqrt{2})\, x(u - k\sqrt{2}) =$$

$$P(u) \sum_k a_k\, x(u - k\sqrt{2}) = [P\,(D * x)](u)$$

Lemme 1

Soit P une fonction périodique de période 1 / √2 et D une distribution de la forme

$$D(u) = \sum_k a_k \delta(u - k\sqrt{2}).$$

Soit x une fonction quelconque. On a : k

D* (Px)=P(D*x)

3.3.4. Lemme 2

Soit la fonction $y_\alpha$ définie par $y_\alpha = D * x_\alpha$ ,avec

$$x_\alpha = (2\alpha)^{1/4}\, e^{-\pi\alpha u^2},$$

et D étant une distribution de la forme

$$D(u) = \sum_k a_k\, \delta(u - k\sqrt{2}).$$

On peut donc écrire:

$$y_\alpha(u) = \sum_k a_k x_\alpha(u - k\sqrt{2})$$

Soit $z_\alpha = Oy_\alpha$ On a:

$$z_\alpha(u) = \frac{2^{1/4} y_\alpha(u)}{\sqrt{\sum_k \left\| y_\alpha(u - k/\sqrt{2}) \right\|^2}}$$

La somme sous la racine peut s'écrire:

$$\sum_k \left\| y_\alpha(u - k/\sqrt{2}) \right\|^2 = \sum_k \sum_{k',k''} a_{k'} . a_{k''} . x_\alpha(u - k/\sqrt{2} - k'\sqrt{2}) x_\alpha(u - k/\sqrt{2} - k''\sqrt{2})$$

Soit encore, par application du résultat donné en annexe:

$$\sum_k \left\| y_\alpha(u - k/\sqrt{2}) \right\|^2 = \sum_k \sum_{k',k''} a_{k'} . a_{k''} . e^{-\pi\alpha(k'-k'')^2} \left\| x_\alpha(u - (k + k' + k'')/\sqrt{2}) \right\|^2$$

puis, en réorganisant les indices et en redéfinissant k comme k + k' + k":

$$\sum_k \left\| y_\alpha(u - k/\sqrt{2}) \right\|^2 = \sum_k \sum_{k',k''} a_{k'} . a_{k''} . e^{-\pi\alpha(k'-k'')^2} \left\| x_\alpha(u - k/\sqrt{2}) \right\|^2$$

On peut donc écrire:

$$\sum_k \left\| y_\alpha(u - k/\sqrt{2}) \right\|^2 = c \sum_k \left\| x_\alpha(u - k/\sqrt{2}) \right\|^2$$

avec

$$c = \sum_{k',k''} a_{k'} . a_{k''} . e^{-\pi\alpha(k'-k'')^2}$$

Par conséquent:

$$z_\alpha(u) = \frac{2^{1/4} y_\alpha(u)}{\sqrt{c\sum_k \left\| x_\alpha(u - k/\sqrt{2}) \right\|^2}} = \frac{1}{\sqrt{c}} P_\alpha(u) y_\alpha(u)$$

avec:

$$P_\alpha(u) = \frac{2^{1/4}}{\sqrt{\sum_k \left\| x_\alpha(u - k/\sqrt{2}) \right\|^2}}$$

Posons $c_0 = \frac{1}{\sqrt{c}}$. On a;

$$z_\alpha = c_0 P_\alpha y_\alpha = c_0 P_\alpha (D * x_\alpha) ,$$

soit, par application du lemme 1:

$$z_\alpha = c_0 \, D * (P_\alpha \, x_\alpha)$$

Finalement, on peut écrire:

$$O[D * x_\alpha] = c_0 \, D * Ox_\alpha$$

<u>Lemme 2</u>

Soit x une gaussienne et D une distribution de la forme

$$D(u) = \sum_k a_k \, \delta(u - k\sqrt{2}) ,$$

alors:

$$O[D * x] = c_0 \, D * Ox ,$$

où $c_0$ est une constante positive

<u>3.3.5.</u> <u>Commutativité des opérateurs O et $F^{-1}OF$</u>

Nous allons maintenant démontrer que les opérateurs O et $F^{-1}OF$ commutent lorsqu'ils sont appliqués à une gaussienne.

Soit

$$x_\alpha = (2\alpha)^{1/4} \, e^{-\pi\alpha u^2}$$

Alors

$$Fx_\alpha = x_{1/\alpha}$$

et

$$Ox_\alpha = P_\alpha x_\alpha$$

Compte tenu du caractère périodique de $P_\alpha$ , sa transformée de Fourier $D_\alpha$ peut s'écrire:

$$D_\alpha(u) = \sum_k a_{\alpha,k}\,\delta(u - k\sqrt{2})$$

Considérons la fonction $z_\alpha$ , résultat de l'orthogonalisation de $y_\alpha$ par O, $y_\alpha$ étant le résultat de l'orthogonalisation de $x_\alpha$ par $F^{-1}OF$. On a donc:

$$z_\alpha = OF^{-1}OFx_\alpha$$

On notera par ailleurs que:

- pour toute fonction réelle paire x, $F^{-1}x = Fx$
- si c est une constante positive, O[cx] = Ox
- pour toute fonction réelle paire x(u), Ox , Fx et $F^{-1}x$ sont des fonctions réelles paires

Compte tenu de ces remarques, on peut écrire:

$$OF^{-1}OFx_\alpha = OF^{-1}Ox_{1/\alpha} = OF^{-1}[P_{1/\alpha}x_{1/\alpha}] = O[D_{1/\alpha} * x_\alpha]$$

Par application du lemme 2:

$$O[D_{1/\alpha} * x_\alpha] = c_1\ D_{1/\alpha} * OX_\alpha = c_1\ D_{1/\alpha} * (P_\alpha x_\alpha\ )$$

$c_1$ étant une constante positive. On en déduit que:

$$OF^{-1}OFx_\alpha = c_1\ D_{1/\alpha} * (P_\alpha x_\alpha\ )$$

De la même façon, on peut écrire:

$$F^{-1}OFOx_\alpha = F^{-1}OF[P_\alpha x_\alpha] = F^{-1}O[D_\alpha * x_{1/\alpha}]$$

Par application du lemme 2:

$$O[D_\alpha * x_{1/\alpha}] = c_2\ D_\alpha * Ox_{1/\alpha} = c_2\ D_\alpha * (P_{1/\alpha}x_{1/\alpha}\ )$$

$c_2$ étant une constante positive. On en déduit que:

$$F^{-1}OFOx_\alpha = c_2\ F^{-1}[D_\alpha * (P_{1/\alpha}x_{1/\alpha})] = c_2\ P_\alpha\ (D_{1/\alpha} * x_\alpha)$$

Or, par application du lemme 1:

$$D_{1/\alpha} * (P_\alpha x_\alpha) = P_\alpha\ (D_{1/\alpha} * x_\alpha)$$

On a donc:

$$c_2\ OF^{-1}OFx_\alpha = c_1\ F^{-1}OFOx_\alpha$$

Or $OF^{-1}OFx_\alpha$ et $F^{-1}OFOx_\alpha$ sont toutes deux de norme unité, et sont donc égales.

Théorème 3

Pour toute fonction gaussienne x, les opérateurs O et $F^{-1}OF$ commutent, soit:

$$OF^{-1}OFx = F^{-1}OFOx$$

Corrolaire 1

Soit $z_\alpha = OF^{-1}OFx_\alpha$, avec $x_\alpha = (2\alpha)^{1/4}$

$$e^{-\pi\alpha u^2},$$

alors $Fz_\alpha = z_{1/\alpha}$
Démonstration:

$$Fz_\alpha = FF^{-1}OFOx_\alpha = OF^{-1}Ox_\alpha = OF^{-1}OFx_{1/\alpha} = z_{1/\alpha}$$

Cas particulier remarquable

$$Fz_1 = z_1$$

Cette fonction particuliere confère une parfaite symétrie aux axes temps et fréquence, et constitue donc la fonction prototype de la transformée IOTA (Isotropic Orthogonal Transform Algorithm). On notera cette fonction particulière $\mathfrak{I}$.

Corrolaire 2

Soit x une fonction gaussienne et $z = OF^{-1}OFx$, alors $Oz = z$
Démonstration:

$$Oz = OOF^{-1}OFx = OF^{-1}OFx = z$$

Corrolaire 3

Soit x une fonction gaussienne et $z = OF^{-1}OFx$, alors $F^{-1}OFz = z$

Démonstration:

$$F^{-1}OFz = F^{-1}OFF^{-1}OFOx = F^{-1}OOFOx = F^{-1}OFOx = z$$

### 3.3.6. Fonction d'ambiguïté des fonctions $z_{\alpha}$

Considérons le théorème 2, avec la normalisation $\tau_0 = \nu_0 = 1/\sqrt{2}$. Alors:

$$O_f = O \text{ et } O_t = F^{-1}OF$$

Par conséquent, le théorème 2 peut se réécrire:

Théorème 4

Soit x une fonction gaussienne et $z= F^{-1}OFOx$ , alors:

$$\forall(m,n)\neq(0,0)\ ,\ A_z(n\sqrt{2},m\sqrt{2})=0$$

## 4. Généralisation à des réseaux quelconques

Nous avons jusqu'ici considéré des bases hilbertiennes construites sur un réseau orthogonal de densité 2. Nous nous intéressons dans ce chapitre à des bases hilbertiennes construites sur un réseau quelconque de densité 2.

### 4.1. Principes généraux de construction

De façon analogue à ce qui a été démontré pour les réseaux orthogonaux, nous montrons dans ce paragraphe comment construire une base hilbertienne sur un réseau quelconque de densité 2 à partir d'une fonction prototype dont la fonction d'ambiguïté s'annule sur un réseau de densité 1/2.

Considérons un réseau quelconque de densité 2, généré à partir des vecteurs de base $(\tau_1, \nu_1)$ et $(\tau_2, \nu_2)$ , avec $|\nu_1\tau_2 - \nu_2\tau_1| = 1/2$. Par convention, on choisira l'ordre des vecteurs de base de telle sorte que $\nu_2\tau_1 - \nu_1\tau_2 = 1/2$. On considère une fonction x(t) telle que:

$$A_x(2n\tau_1 + 2m\tau_2, 2n\nu_1 + 2m\nu_2) = 0$$

dont la fonction d'ambiguïté s'annule donc sur un réseau de densité 1/2. Considérons l'ensemble des fonctions $\{x_{m,n}\}$ définies par:

$$x_{m,n}(t) = e^{i\varphi_{m,n}} e^{2i\pi(n\nu_1+m\nu_2)t} x(t-(n\tau_1+m\tau_2))$$

Calculons le produit scalaire $\langle x_{m,n}|x_{m',n'}\rangle$, soit:

$$\langle x_{m,n}|x_{m',n'}\rangle = e^{i(\varphi_{m,n}-\varphi_{m',n'})} e^{i\theta} A_x((n'-n)\tau_1 + (m'-m)\tau_2),(n'-n)\nu_1 + (m'-m)\nu_2)$$

avec

$$\theta = \pi((n-n')\nu_1 + (m-m')\nu_2)((n+n')\tau_1 + (m+m')\tau_2) =$$

$$\pi((n^2 - n'^2)\nu_1\tau_1 + (m^2 - m'^2)\nu_2\tau_2 + 2(mn-m'n')\nu_1\tau_2 + (m-m')(n+n')(\nu_2\tau_1 -$$

$$\text{Or}\nu_2\tau_1 - \nu_1\tau_2 = 1/2.$$

En posant $\psi_{m,n} = \pi(n^2\nu_1\tau_1 + m^2\nu_2\tau_2 + 2mn\nu_1\tau_2)$, on obtient donc:

$$\theta = \psi_{m,n} - \psi_{m',n'} + (m-m')(n+n')\pi/2$$

Posons $\varphi_{m,n} = (m+n)\pi/2 - \psi_{m,n}$ . Le produit scalaire $\langle x_{m,n} | x_{m',n'} \rangle_R$ s'écrit finalement:

$$\Re e\left[e^{i((m+n)-(m'+n')+(m-m')(n+n'))\pi/2} A_x((n'-n)\tau_1 + (m'-m)\tau_2),(n'-n)\nu_1 + (m'-m)\nu_2)\right]$$

La fonction d'ambiguïté de x étant réelle, on s'intéressera à son coefficient. On retrouve le même terme de phase que dans le cas d'un réseau orthogonal. Par conséquent, si(m,n)≠(m',n') modulo 2, le produit scalaire est nul. Dans le cas contraire, il est également nul en raison de l'hypothèse faite sur la fonction d'ambiguïté de x.

On dispose donc d'une méthode générale pour construire des bases hilbertiennes sur des réseaux quelconques dans le plan temps-fréquence. D reste donc à construire des fonctions prototypes dont la fonction d'ambiguïté présente les propriété requises.

4.2. Changement de coordonnées dans le plan temps-fréquence

Nous avons déjà rencontré jusqu'à présent des opérateurs dont l'action pouvait être aisément interprétée dans le plan temps-fréquence, tels que les opérateurs d'orthogonalisation, qui créent des points d'annulation de la fonction d'ambiguïté sur un réseau orthogonal de densité 1/2. Nous nous intéressons ci-après à de nouveaux opérateurs, qui effectuent des changements de coordonnées dans le plan temps-fréquence. Ces opérateurs permettent de transformer une fonction prototype dont la fonction d'ambiguïté s'annule sur un réseau orthogonal de densité 1/2 en une fonction prototype dont la fonction d'ambiguïté s'annule sur un réseau quelconque de densité 1/2.

Soit un opérateur T qui associe à une fonction x la fonction y = Tx telle que:

$$A_y((\tau,\nu)^t M_T) = A_x(\tau,\nu)$$

$M_T$ étant une matrice dont le déterminant est égal à 1.

L'opérateur T réalise donc un changement de coordonnées dans le plan temps fréquence caractérisé par la matrice $M_T$

4.3. Opérateurs de base.

4.3.1.Opérateur de transformée de Fourier

Nous avons vu précédemment que si X est la transformée de x, soit X = Fx, on avait la relation:

$$A_x(\nu,-\tau) = A_x(\tau,\nu)$$

La matrice caractéristique correspondante s'écrit donc:

$$M_F = \begin{bmatrix} 0 & 1 \\ -1 & 0 \end{bmatrix}$$

Cette matrice correspond à une rotation de -π/2 dans le plan temps fréquence.

4.3.2. Opérateur de déphasage

Considérons l'opérateur de déphasage $P^\theta$ qui associe à une fonction x la fonction y telle que:

$$y(t) = e^{i\theta}x(t)$$

On a évidemment:

$$A_y(\tau, \nu) = A_x(\tau, \nu)$$

et par conséquent

$$M_{p\theta} = I,$$

I étant la matrice identité.

4.3.3. Opérateur d'homothétie

L'opérateur d'homothétie $H_\gamma$ est l'opérateur qui associe à une fonction x(t) la fonction y(t) définie par:

$$y(t) = \frac{1}{\sqrt{|\gamma|}} x(t/\gamma)$$

$\gamma$ étant le facteur d'homothétie considéré.

On a donc:

$$A_y(\tau,\nu) = \frac{1}{|\gamma|}\int_{-\infty}^{+\infty} x((t+\tau/2)/\gamma)x^*((t+\tau/2)/\gamma)\, e^{-2i\pi\nu t}dt$$

Soit u = t/$\gamma$. Si $\gamma$ est positif:

$$A_y(\tau,\nu) = \int_{-\infty}^{+\infty} x(u+(\tau/\gamma)/2)x^*(u+(\tau/\gamma)/2)\, e^{-2i\pi\gamma\nu u}du$$

Si $\gamma$ est négatif:

$$A_y(\tau,\nu) = -\int_{+\infty}^{-\infty} x(u+(\tau/\gamma)/2)x^*(u+(\tau/\gamma)/2)\, e^{-2i\pi\gamma\nu u}du$$

Dans les deux cas, $A_y(\tau, \nu) = A_x(\tau/\gamma, \gamma\nu)$soit:

$$A_y(\gamma\tau, \nu/\gamma) = A_x(\tau, \nu)$$

par conséquent

$$M_{H_\gamma} = \begin{bmatrix} \gamma & 0 \\ 0 & 1/\gamma \end{bmatrix}$$

4.3.4. Opérateur de wobulation

Une méthode simple pour modifier la fonction d'ambiguïté d'une fonction consiste à la multiplier par un signal de wobulation. On appelle $W^\beta$ l'opérateur de wobulation temporelle qui associe à une fonction x(t) la fonction y(t) définie par:

$$y(t) = x(t)e^{i\pi\beta t^2}$$

On peut alors écrire:

$$\gamma_y(t,\tau) = y(t+\tau/2)y^*(t-\tau/2) = x(t+\tau/2)x^*(t-\tau/2)e^{2i\pi\beta\tau t} = \gamma_x(t,\tau)e^{2i\pi\beta\tau t}$$

Soit, par transformée de Fourier:

$$A_y(\tau,\nu) = \int \gamma_y(t,\tau)e^{-2i\pi\nu t}dt = \int \gamma_x(t,\tau)e^{-2i\pi(\nu-\beta\tau)t}dt = A_x(\tau,\nu-\beta\tau)$$

ou encore:

$$A_y(\tau, \nu + \beta\tau) = A_x(\tau, \nu)$$

par conséquent

$$M_{W^\beta} = \begin{bmatrix} 1 & 0 \\ \beta & 1 \end{bmatrix}$$

4.4. Groupe des opérateurs temps fréquence

On considère l'ensemble des opérateurs qui peuvent être engendrés par une conjuguaison finie d'opérateurs de base décrits ci-dessus. On notera tout d'abord que si $y = Tx = T_1T_2 \ldots T_nx$ , alors on a aussi:

$$M_T = M_{T_1}M_{T_2} \ldots M_{T_n}$$

De façon évidente, cet ensemble muni du produit défini comme la conjuguaison des opérateurs possède une structure de groupe.

4.4.1. Règles de base pour la multiplication des opérateurs

La multiplication des opérateurs obéit aux règles suivantes:

$$F^4 = I$$

$$F^2 = H_{-1}$$

$$P^{\theta}P^{\theta'} = P^{\theta+\theta'}$$

$$H_{\gamma}H_{\gamma'} = H_{\gamma\gamma'}$$

$$W^{\beta}W^{\beta'} = W^{\beta+\beta'}$$

Par ailleurs, $F^2$ et $P^{\theta}$ commutent avec tous les autres opérateurs. Enfin on notera les relations suivantes:

$$H_{\gamma}Fx(\nu) = \frac{1}{\sqrt{|\gamma|}}\int x(u)e^{-2i\pi u\nu/\gamma}du$$

Soit u'= u / $\gamma$ . Si $\gamma$ est positif:

$$H_{\gamma}Fx(\nu) = \sqrt{|\gamma|}\int_{-\infty}^{+\infty} x(\gamma u')e^{-2i\pi u'\nu}du' = FH_{1/\gamma}x(\nu)$$

Si $\gamma$ est négatif:

$$H_{\gamma}Fx(\nu) = -\sqrt{|\gamma|}\int_{+\infty}^{-\infty} x(\gamma u')e^{-2i\pi u'\nu}du' = FH_{1/\gamma}x(\nu)$$

Dans les deux cas, on a donc $H_{\gamma}F = FH_{1/\gamma}$ .
De la même façon:

$$H_{\gamma}W^{\beta}x(u) = \frac{1}{\sqrt{|\gamma|}}e^{i\pi\beta(u/\gamma)^2}x(u/\gamma) = e^{i\pi(\beta/\gamma^2)u^2}H_{\gamma}x(u) = W^{\beta/\gamma^2}H_{\gamma}x(u)$$

On a donc

$$H_{\gamma}W^{\beta} = W^{\beta/\gamma^2}H_{\gamma}$$

4.4.2. Extension du "Chirp Transform Algorithm"

Les règles décrites ci-dessus permettent de commuter tous les opérateurs entre eux, à l'exception de la transformée de Fourier et de l'opérateur de wobulation. Les règles permettant de commuter ces derniers opérateurs sont plus complexes et peuvent être extrapolées à partir de l'algorithme "Chirp Transform".
On considère ici une relation liant les opérateurs F, W et H. Soit $\delta_t(u) = \delta(u-t)$. Les opérateurs considérés étant linéaires, leurs propriétés peuvent être analysées en considérant leur action sur les distributions $\delta_t$ , en vertu de la relation:

$$x(t) = \int x(u)\delta_t(u)du$$

On a:

$$\begin{aligned}
&W^{\beta}\delta_t(u) = e^{i\pi\beta t^2}\delta_t(u) \Rightarrow \\
&FW^{\beta}\delta_t(v) = e^{i\pi\beta t^2}e^{-2i\pi vt} \Rightarrow \\
&W^{1/\beta}FW^{\beta}\delta_t(v) = e^{i\pi\beta t^2}e^{-2i\pi vt}e^{i\pi v^2/\beta} = e^{i\pi\beta(v/\beta-t)^2} \Rightarrow \\
&H_{1/\beta}W^{1/\beta}FW^{\beta}\delta_t(v) = \sqrt{\beta}\,e^{i\pi\beta(v-t)^2} = \sqrt{\beta}(W^{\beta} * \delta_t)(v) \Rightarrow \\
&FH_{1/\beta}W^{1/\beta}FW^{\beta}\delta_t(u) = \sqrt{i}\;W^{-1/\beta}e^{-2i\pi ut} \Rightarrow \\
&W^{1/\beta}FH_{1/\beta}W^{1/\beta}FW^{\beta}\delta_t(u) = \sqrt{i}\;e^{-2i\pi ut} \Rightarrow \\
&F^3W^{1/\beta}FH_{1/\beta}W^{1/\beta}FW^{\beta}\delta_t(v) = \sqrt{i}\;\delta_t(v) \Rightarrow \\
&FW^{1/\beta}FH_{-1/\beta}W^{1/\beta}FW^{\beta} = P^{\pi/4}
\end{aligned}$$

On a donc finalement:

$$FW^{1/\beta}F = P^{\pi/4}W^{-\beta}FW^{-1/\beta}H_{\beta}$$

4.4.3. Décomposition canonique

Soit un élément de l'ensemble des opérateurs défini ci dessus. Si cet élément ne comporte aucun opérateur F, on peut, en utilisant les régles données en 4.4.1, le réduire sous la forme:

$$T = P^{\theta}H_{\gamma}W^{\alpha}$$

Si cet élément ne comporte qu'un seul opérateur F , on peut, en appliquant les mêmes règles, le réduire sous la forme:

$$T = P^{\theta}H_{\gamma}W^{\alpha}FW^{\beta}$$

Si cet élément comporte au moins deux opérateurs F, on peut le réduire sous la forme:

$$T = P^{\theta}H_{\gamma}W^{\alpha}FW^{\beta_1}\ldots FW^{\beta_n}$$

En appliquant la règle donnée en 4.4.2, on peut éliminer de façon itérative les opérateurs F et obtenir finalement une représentation n'en comportant qu'un seul. En résumé, tous les éléments du groupe peuvent s'écrire sous l'une des deux représentations données ci-dessus.

Soit T un élément du groupe s'écrivant sous le premier type de représentation. Sa matrice caractéristique s'écrit:

$$M_T = \begin{bmatrix} \gamma & 0 \\ 0 & 1/\gamma \end{bmatrix}\begin{bmatrix} 1 & 0 \\ \alpha & 1 \end{bmatrix} = \begin{bmatrix} \gamma & 0 \\ \alpha/\gamma & 1/\gamma \end{bmatrix}$$

Soit T un élément du groupe s'écrivant sous le deuxième type de représentation. Sa matrice caractéristique

s'écrit:

$$M_T = \begin{bmatrix} \gamma & 0 \\ 0 & 1/\gamma \end{bmatrix} \begin{bmatrix} 1 & 0 \\ \alpha & 1 \end{bmatrix} \begin{bmatrix} 0 & 1 \\ -1 & 0 \end{bmatrix} \begin{bmatrix} 1 & 0 \\ \beta & 1 \end{bmatrix} = \begin{bmatrix} \beta\gamma & \gamma \\ (\alpha\beta - 1)/\gamma & \alpha/\gamma \end{bmatrix}$$

Inversement, soit une matrice $M_T$ quelconque de déterminant unité. On peut lui associer un opérateur décrit sous sa représentation canonique:

$$M_T = \begin{bmatrix} a & c \\ b & d \end{bmatrix}$$

avec ad - bc = I

Si c = 0, on peut associer à cette matrice un opérateur de premier type, avec:

$$\begin{cases} \gamma = a \\ \alpha = ab \end{cases}$$

Si c ≠ 0, on peut associer à cette matrice un opérateur de deuxième type, avec:

$$\begin{cases} \gamma = c \\ \alpha = cd \\ \beta = a/c \end{cases}$$

Notons qu'il subsiste évidemment une indétermination totale en ce qui concerne θ.

4.5. Construction d'une base hilbertienne sur un réseau quelconque

Les méthodes qui ont été décrites ci-dessus donnent une méthode générale de construction d'une base hilbertienne sur un réseau quelconque. Considérons un réseau quelconque de densité 2, généré à partir des vecteurs de base $(\tau_1, \nu_1)$ et $(\tau_2, \nu_2)$ avec $\nu_2\tau_1 - \nu_1\tau_2 = 1/2$. On considère une fonction x(t) telle que:

$$\forall (m, n) \neq (0,0)\ ,\ A_x(n\sqrt{2}, m\sqrt{2}) = 0$$

La fonction x peut en pratique être la fontion prototype de l'OQAM, OMSK ou l'une quelconque des fonctions obtenues par orthogonaisation de gaussiennes, comme indiqué au chapitre 3, et en particulier la fonction IOTA.

Soit T un opérateur de matrice caractéristique $M_T$ défini par:

$$M_T = \sqrt{2} \begin{bmatrix} \tau_1 & \tau_2 \\ \nu_1 & \nu_2 \end{bmatrix}$$

et y = Tx. Alors, $\forall (m,n) \neq (0,0)$:

$$A_y(2n\tau_1 + 2m\tau_2, 2n\nu_1 + 2m\nu_2) = A_y((n\sqrt{2}, m\sqrt{2})^t M_T) = A_x((n\sqrt{2}, m\sqrt{2}) = (0,0)$$

Considérons l'ensemble des fonctions { $y_{m,n}$ } définies par:

$$y_{m,n}(t) = e^{i\varphi_{m,n}} e^{2i\pi(n\nu_1 + m\nu_2)t} y(t - (n\tau_1 + m\tau_2))$$

avec

$$\varphi_{m,n} = (m+n)\pi/2 - \pi(n^2\nu_1\tau_1 + m^2\nu_2\tau_2 + 2mn\nu_1\tau_2)$$

Conformément à ce qui a été démontré en 4.1., l'ensemble des fonctions { $y_{m,n}$ } constitue une base hilbertienne. On dispose donc d'une méthode générale pour construire des bases hilbertiennes sur des réseaux quelconques dans le plan temps-fréquence.

**5. Construction de bases hilbertiennes en quinconce**

Bien que la méthode générale décrite ci-dessus présente un intérêt académique évident, son application pratique révèle certaines difficultés. D'une part, dans le cas général, les algorithmes de démodulation sont sérieusement compliqués par la structure oblique du réseau des fonctions de base. Par ailleurs, la fonction prototype obtenue est généralement complexe, ce qui accroit encore la complexité.

On peut donc légitimement se demander si cette généralisation présente un quelconque intérêt pratique. L'objet de ce paragraphe est d'apporter une réponse complète à cette question.

Considérons l'ensemble des bases hilbertiennes générées selon la méthode exposée ci-dessus. On cherche, à l'intérieur de cet ensemble, les bases hilbertiennes dont la fonction prototype est réelle paire. La fonction d'ambiguïté présente alors les symétries suivantes:

$$A_x(\tau,\nu) = \int e^{-2i\pi\nu t} x(t+\tau/2)x^*(t-\tau/2)dt = \int e^{-2i\pi\nu t} x(t-\tau/2)x^*(t+\tau/2)dt = A_x(-\tau,\nu)$$

et

$$A_x(\tau,\nu) = \int e^{-2i\pi\nu t} x(t+\tau/2)x^*(t-\tau/2)dt = \int e^{2i\pi\nu t} x^*(t+\tau/2)x(t-\tau/2)dt = A_x(-\tau,-\nu)$$

On a donc $A_x(\tau, \nu) = A_x(-\tau, \nu) = A_x(-\tau,-\nu) = A_x(-\tau,\nu)$. Ces symétries de la fonction d'ambiguïté ne peuvent être obtenues que si le réseau d'annulation de cette fonction présente les mêmes symétries. Or ces conditions ne sont vérifiées que pour deux types de réseaux: le réseau orthogonal sur lequel sont basées toutes les modulations considérées jusqu'à présent, et le réseau en quinconce.

Le réseau orthogonal est engendré par les vecteurs de base $(\tau_1,\nu_1) = (1/\sqrt{2},0)$ et $(\tau_2,\nu_2) = (0,1/\sqrt{2})$. Le réseau en quinconce, engendré par les vecteurs $(\tau_1,\nu_1) = (1/2,-1/2)$ et $(\tau_2, \nu_2) = (1/2,1/2)$. On passe d'un réseau à l'autre par une rotation d'angle $-\pi/4$. C'est pourquoi nous accorderons ci-après un intérêt tout particulier aux opérateurs qui réalisent une rotation dans le plan temps-fréquence.

5.1. Sous-groupe des opérateurs de rotation temps fréquence

On considère l'ensemble des opérateurs dont la matrice caractéristique est une rotation dans le plan temps-fréquence:

$$M_T = \begin{bmatrix} \cos\varphi & -\sin\varphi \\ \sin\varphi & \cos\varphi \end{bmatrix}$$

Nous avons déjà vu que l'opérateur de transformée de Fourier F correspondait à une rotation d'angle $\varphi = -\pi/$

2, tandis que l'opérateur $F^3 = F^{-1}$ correspondait à une rotation d'angle $\varphi = \pi/2$.

Considérons un opérateur de la forme:

$$P^{\theta}FW^{\alpha}H_{\gamma}FW^{\beta}$$

Sa matrice caractéristique s'écrit:

$$M_T = \begin{bmatrix} 0 & 1 \\ -1 & 0 \end{bmatrix} \begin{bmatrix} 1 & 0 \\ \alpha & 1 \end{bmatrix} \begin{bmatrix} \gamma & 0 \\ 0 & 1/\gamma \end{bmatrix} \begin{bmatrix} 0 & 1 \\ -1 & 0 \end{bmatrix} \begin{bmatrix} 1 & 0 \\ \beta & 1 \end{bmatrix} = \begin{bmatrix} \alpha\beta\gamma - 1/\gamma & \alpha\gamma \\ -\beta\gamma & -\gamma \end{bmatrix}$$

En posant $\gamma = -\cos\varphi$ et $\alpha = \beta = \mathrm{tg}\varphi$ , on obtient une matrice de rotation d'angle $\varphi$. Le paramètre $\theta$ reste indéterminé. Pour lever cette indétermination, on imposera que cet opérateur laisse invariante la fonction gaussienne $x(u) = e^{-\pi u^2}$, soit:

$$W^{\mathrm{tg}\varphi}x(u) = e^{-\pi(1-i\,\mathrm{tg}\varphi)u^2} \Rightarrow$$

$$FW^{\mathrm{tg}\varphi}x(v) = \frac{1}{\sqrt{1-i\,\mathrm{tg}\varphi}}e^{-\pi v^2/(1-i\mathrm{tg}\varphi)} \Rightarrow$$

$$H_{-\cos\varphi}FW^{-\mathrm{tg}\varphi}x(v) = \frac{1}{\sqrt{(1-i\,\mathrm{tg}\varphi)|\cos\varphi|}}e^{-\pi v^2/((1-i\,\mathrm{tg}\varphi)\cos^2\varphi)}$$

$$W^{\mathrm{tg}\varphi}H_{-\cos\varphi}FW^{\mathrm{tg}\varphi}x(v) = \frac{1}{\sqrt{(1-i\,\mathrm{tg}\varphi)|\cos\varphi|}}e^{-\pi v^2/((1-i\,\mathrm{tg}\varphi)\cos^2\varphi)}e^{i\pi v^2\mathrm{tg}\varphi}$$

Or

$$\frac{1}{(\cos^2\varphi)(1-i\,\mathrm{tg}\varphi)} - i\,\mathrm{tg}\varphi = \frac{1+i\mathrm{tg}\varphi}{(\cos^2\varphi)(1+\ \mathrm{tg}^2\varphi)} - i\,\mathrm{tg}\varphi\ = 1 \Rightarrow$$

$$W^{\mathrm{tg}\varphi}H_{-\cos\varphi}FW^{\mathrm{tg}\varphi}x(v) = \frac{1}{\sqrt{(1-i\,\mathrm{tg}\varphi)|\cos\varphi|}}e^{-\pi v^2}$$

$$FW^{\mathrm{tg}\varphi}H_{-\cos\varphi}FW^{\mathrm{tg}\varphi}x(u) = \frac{1}{\sqrt{(1-i\,\mathrm{tg}\varphi)|\cos\varphi|}}e^{-\pi u^2}$$

On appelle $\varphi_{\mathrm{mod}\,\pi}$ désignant la valeur comprise entre $-\pi/2$ et $\pi/2$ congrue à $\varphi$ modulo $\pi$. On peut donc écrire:

$$\frac{1}{\sqrt{(1-i\,\mathrm{tg}\varphi)|\cos\varphi|}} = \frac{1}{\sqrt{(1-i\,\mathrm{tg}\varphi_{\mathrm{mod}\,\pi})\cos\varphi_{\mathrm{mod}\,\pi}}} = e^{i\varphi_{\mathrm{mod}\,\pi}/2}$$

Finalement, on peut écrire:

$$P^{-\varphi_{modulo}/2} F W^{\mathrm{tg}\varphi} H_{-\cos\varphi} F W^{\mathrm{tg}\varphi} x(u) = x(u)$$

Définition:

On appelle R°l'opérateur de rotation dans le plan temps-fréquence d'angle φ défini par:

$$R^{\varphi} = \begin{cases} F & \text{si } \varphi \equiv -\pi/2 \text{ modulo } 2\pi \\ F^{-1} & \text{si } \varphi \equiv \pi\ /2 \text{ modulo } 2\pi \\ P^{-\varphi_{modulo}/2} F W^{\mathrm{tg}\varphi} H_{-\cos\varphi} F W^{\mathrm{tg}\varphi} & \text{sinon} \end{cases}$$

Soit un nombre réel α. On définit également la puissance fractionnaire de l'opérateur F par la relation:

$$F^{\alpha} = R^{-\alpha\pi/2}$$

L'ensemble d'opérateurs ainsi défini possède une structure de groupe commutatif isomorphe au groupe des rotations du plan. La notation d'exposant de l'opérateur Fvérifie toutes les propriétés « habituelles » d'un exposant.

5.2. IOTA π/4

Considérons une fonction prototype x(t) réelle paire permettant de générer une base hilbertienne sur le réseau orthogonal, et la fonction y(t) définie par:

$$y = F^{1/2}x$$

où $F^{1/2}$ est l'opérateur racine carrée de la transformée de Fourier comme défini ci-dessus. Au niveau des fonctions d'ambiguïté, cet opérateur réalise une rotation d'angle -π/4 dans le plan temps fréquence. Pour que la fonction y(t) soit réelle paire, il faut que sa fonction d'ambiguïté présente une symétrie par rapport aux axes temps et fréquence. Ceci implique donc que la fonction x(t) présente, en sus de la symétrie par rapport aux axes temps et fréquence, une symétrie par rapport aux diagonales du plan temps-fréquence. Une telle propriété ne peut être vérifiée que si la fonction x(t) est identique à sa transformée de Fourier. Or nous ne connaissons qu'une seule fonction ayant cette propriété, qui est la fonction IOTA.

On définit la fonction IOTA π/4 par la relation:

$$\mathfrak{I}^{\pi/4} = F^{1/2}\mathfrak{I}$$

Cette fonction est par construction réelle et paire. La fonction d'ambiguïté de cette fonction s'annule donc sur le réseau en quinconce engendré par les vecteurs $(\tau_1, \nu_1)$ = (1/2,-1/2) et $(\tau_2, \nu_2)$ = (1/2,1/2). Conformément à 4.1., on en déduit que l'ensemble des fonctions

$$\{\mathfrak{I}_{m,n}^{\pi/4}\}$$

défini par:

$$\mathfrak{I}_{m,n}^{\pi/4}(t) = e^{i\varphi_{m,n}} e^{i\pi(m+n)t}\,\mathfrak{I}^{\pi/4}(t-(m-n)/2)$$

avec

$$\varphi_{m,n} = (m+n-mn-(m^2-n^2)/2)\pi/2$$

constitue une base hilbertienne.

En redéfinissant les indices, on peut réécrire la définition de cet ensemble de la façon suivante:

$$\Im_{m,n}^{\pi/4}(t) = e^{i\varphi_{m,n}} e^{i\pi mt} \Im^{\pi/4}(t - n/2) \quad , m+n \text{ pair}$$

avec

$$\varphi_{m,n} = (m - mn/2 + (n^2 - m^2)/4)\pi/2$$

**6. Annexe**

On notera l'identité:

$$(u-a)^2 + (u-b)^2 = 2u^2 - 2au - 2bu + a^2 + b^2 =$$

$$2\left[u^2 - au - bu + \left(\frac{a+b}{2}\right)^2 + \left(\frac{a-b}{2}\right)^2\right] = 2\left[\left(u - \frac{a+b}{2}\right)^2 + \left(\frac{a-b}{2}\right)^2\right]$$

Soit une fonction gaussienne normalisée x définie par:

$$x(u) = (2\alpha)^{1/4} e^{-\pi\alpha u^2}$$

Le produit x(u - a)x(u - b) peut donc s'écrire:

$$x(u-a)x(u-b) = \sqrt{2\alpha}\, e^{-\pi\alpha((u-a)^2+(u-b)^2} = \sqrt{2\alpha}\, e^{-2\pi\alpha\left(u-\frac{a+b}{2}\right)^2} e^{-2\pi\alpha\left(\frac{a-b}{2}\right)^2}$$

Finalement, on peut écrire:

$$x(u-a)x(u-b) = e^{-\pi\alpha(a-b)^2/2} \left\| x\left(u - \left(\frac{a+b}{2}\right)\right) \right\|^2$$

**ANNEXE 4**

**1. Du continu au discret**

Dans les deux chapitres précédents, nous avons considéré des fonctions de $L^2(R)$. En pratique, le traitement numérique des signaux suppose que l'on passe dans le domaine discret.

1.1. Généralités

Les signaux utilisés dans la pratique sont toujours considérés comme limités à la fois dans le domaine temporel et le domaine fréquentiel, bien que cette hypothèse soit une impossibilité théorique notoire. On peut toutefois contourner cet obstacle et représenter des signaux par un ensemble fini de valeurs discrètes en appliquant la méthode suivante:

Supposons que nous nous intéressions à un signal complexe x(t) quelconque dans un espace limité à [0,T] dans le domaine temporel et à [-W/2,W/2] dans le domaine fréquentiel. On se restreindra au cas où le produit WT est entier. On peut associer à ce signal un vecteur $\vec{x}$ de coordonnées $x_p$ avec:

$$x_p = \sum_{q=-\infty}^{+\infty} x(p/W + qT)\text{ , p variant de 0 à WT-1}$$

La sommation selon l'indice q effectue un repliement temporel et "périodise" donc le signal dans le temps, tandis que l'échantillonnage "périodise" le signal en fréquence.

Soit

$$y(t)=x(t)e^{2i\pi mt/T}$$

On peut écrire:

$$y_p = \sum_{q=-\infty}^{+\infty} y(p/W + qT) = \sum_{q=-\infty}^{+\infty} e^{2i\pi m(p/W+qT)/T} x(p/W + qT) = e^{2i\pi mp/WT} \sum_{q=-\infty}^{+\infty} x(p/W + qT) = e^{2i\pi mp/WT} x_p$$

On notera que ce résultat parfaitement "naturel" n'est obtenu qu'au prix d'un choix particulier de la fréquence de modulation, qui élimine tous les problèmes de repliement. De la même façon, si l'on considère une translation du type y(t) = x(t - n/W), on peut écrire:

$$y_p = \sum_{q=-\infty}^{+\infty} y(p/W + qT) = \sum_{q=-\infty}^{+\infty} x((p-n)/W + qT) = \sum_{q=-\infty}^{+\infty} x((p-n) \bmod WT / W + qT) = x_{(p-n) \bmod WT}$$

D'une manière générale, le choix de structures d'échantillonnage temporel et fréquentiel qui soient respectivement mutiples de 1/W et de 1/T garantit un repliement harmonieux des signaux, et permet une écriture dans le domaine discret qui soit directement équivalente à celle du domaine continu.

Considérons enfin le produit scalaire de deux vecteurs $\vec{x}$ et $\vec{y}$. On peut écrire:

$$\langle \vec{x} | \vec{y} \rangle = \sum_{n=0}^{WT-1} x_n y_n^* = \sum_{n=0}^{WT-1} \sum_{q'=-\infty}^{+\infty} x(n/W + q'T) \sum_{q''=-\infty}^{+\infty} y^*(n/W + q''T)$$

Posons

$$p = n + q'WT \text{ et } q = q' - q''$$

$$\langle \vec{x} | \vec{y} \rangle = \sum_{p=-\infty}^{+\infty} x(p/W) \sum_{q=-\infty}^{+\infty} y^*(p/W - qT) = \sum_{q=-\infty}^{+\infty} \int_{-\infty}^{+\infty} x(t) y^*(t - qT) \sum_{p=-\infty}^{+\infty} \delta(t - p/W)\, dt$$

Or

$$\sum_{p=-\infty}^{+\infty} \delta(t - p/W) = W \sum_{p=-\infty}^{+\infty} e^{-2i\pi pWT} \Rightarrow$$

$$\langle \vec{x} | \vec{y} \rangle = W \sum_{p=-\infty}^{+\infty} \sum_{q=-\infty}^{-\infty} \int_{-\infty}^{+\infty} x(t) y^*(t - qT) e^{-2i\pi pWt} dt$$

1.2. La tranformée IOTA

On s'intéressera ici à une première transformée dérivant des résultats obtenus dans le chapitre "l'approche théorique", et basée sur la fonction IOTA.

1.2.1. La transformée IOTA dans le domaine continu

On considère ici une transformée "normalisée", c'est à dire construite sur la base du réseau de type (n/√2,m/√2) décrit précédemment. On pourra toujours se ramener à cette situation par l'action préalable de l'opérateur d'homothétie adéquat. Soit la base hilbertienne

$$\{\Im_{m,n}\}$$

définie par:

$$\Im_{m,n}(t) = e^{i\varphi_{m,n}} e^{\sqrt{2} i\pi m t} \Im\left(t - \frac{n}{\sqrt{2}}\right)$$

avec

$$\varphi_{m,n} = (m+n)\pi/2$$

On notera que l'on peut alternativement choisir la formulation suivante:

$$\begin{cases} \varphi_{m,n} = 0 & \text{si } m+n \text{ pair} \\ \varphi_{m,n} = \pi/2 & \text{si } m+n \text{ impair} \end{cases}$$

cette modification correspondant à une éventuelle inversion de signe des fonctions de base. La transformée IOTA d'un signal s(t) de transformée de Fourier S(f) est alors définie par les relations:

$$a_{m,n} = \Re e \int s(t) \Im^*_{m,n} dt = \Re e \int s(t) e^{-i\varphi_{m,n}} e^{-\sqrt{2}i\pi mt} \Im(t - \frac{n}{\sqrt{2}}) dt$$

$$= (-1)^{mn} \Re e \int S(f) e^{-i\varphi_{m,n}} e^{\sqrt{2}i\pi nf} \Im(f - \frac{m}{\sqrt{2}}) df$$

les transformées inverses étant données par:

$$s(t) = \sum_{m,n} a_{m,n} \Im_{m,n}(t) = \sum_{m,n} a_{m,n} e^{i\varphi_{m,n}} e^{\sqrt{2}i\pi mt} \Im(t - \frac{n}{\sqrt{2}})$$

$$S(f) = \sum_{m,n} (-1)^{mn} a_{m,n} e^{i\varphi_{m,n}} e^{-\sqrt{2}i\pi nf} \Im(f - \frac{m}{\sqrt{2}})$$

1.2.2. La transformée IOTA discrète

Choisissons T égal à N√2 et W égal à M√2. Ce choix garantit l'absence de problèmes de repliement. Considérons une fonction de base $\Im_{m,n}$. On peut lui associer le vecteur $\bar{\Im}_{m,n}$ de coordonnées $\Im_{m,n,p}$ avec:

$$\Im_{m,n,p} = \sum_{q=-\infty}^{+\infty} \Im_{m,n}(p/W + qT) = \sum_{q=-\infty}^{+\infty} e^{i\varphi_{m,n}} e^{\sqrt{2}i\pi m(p/W+qT)} \Im(p/W + qT - \frac{n}{\sqrt{2}}) =$$

$$e^{i\varphi_{m,n}} e^{i\pi mp/M} \sum_{q=-\infty}^{+\infty} \Im(\frac{p-nM}{W} + qT) = e^{i\varphi_{m,n}} e^{i\pi mp/M} \Im_{p-nM}$$

Soit un produit scalaire du type

$$\left\langle \bar{\Im}_{m,n} \middle| \bar{\Im}_{m',n'} \right\rangle_R .$$

Compte tenu des propriétés d'orthogonalité des translatées temps-fréquence de la fonction IOTA, ce produit scalaire est nul si (m, n) ≠ (m', n') mod (2M, 2N). En ce qui concerne la norme des vecteurs $\bar{\Im}_{m,n}$, on peut écrire:

$$\left\langle \bar{\Im}_{m,n} \middle| \bar{\Im}_{m,n} \right\rangle_R = \left\langle \bar{\Im}_{m,n} \middle| \bar{\Im}_{m,n} \right\rangle = W \sum_{p=-\infty}^{+\infty} \sum_{q=-\infty}^{+\infty} \int_{-\infty}^{+\infty} \Im_{m,n}(t) \Im^*_{m,n}(t - qT) e^{-2i\pi pW t} dt =$$

$$W \sum_{p=-\infty}^{+\infty} \sum_{q=-\infty}^{+\infty} \int_{-\infty}^{+\infty} \Im_{m,n}(t + qT/2) \Im^*_{m,n}(t - qT/2) e^{-2i\pi pW t} dt = W \sum_{p=-\infty}^{+\infty} \sum_{q=-\infty}^{+\infty} A_{\Im_{m,n}}(qT$$

$$WA_{\Im_{m,n}}(0,0) = WA_{\Im}(0,0) = M\sqrt{2}$$

Compte tenu de ces observations on peut définir la tranformée IOTA discrète de la façon suivante:

Définition de la transformée IOTA

Soit M et N deux entiers quelconques. On considère 4MN vecteurs de dimension 2MN, orthogonaux au sens du produit scalaire réel, et définis de la façon suivante:

$$\Im_{m,n,p} = e^{i\varphi_{m,n}} e^{i\pi mp/M} \Im_{p-nM}$$

m variant de 0 à 2M-1, n de 0 à 2N-1 et p de 0 à 2MN-1

Soit $\vec{s}$ un vecteur complexe de dimension 2MN. On peut le décomposer sous la forme:

$$s_p = \sum_{m=0}^{2M-1} \sum_{n=0}^{2N-1} a_{m,n} \Im_{m,n,p}$$

p variant de 0 à 2MN - 1, avec:

$$a_{m,n} = \frac{1}{M\sqrt{2}} \Re e\left[\sum_{p=0}^{2MN-1} s_p \Im'_{m,n,p}\right]$$

La matrice $\{a_{m,n}\}$ est la transformée IOTA du vecteur $\vec{s}$.

1.3. La tranformée IOTA π/4

1.3.1. La tranformée IOTA π/4 dans le domaine continu

On considère ici une transformée "normalisée", c'est à dire construite sur la base du réseau normalisé de type quinconce décrit précédemment. On pourra toujours se ramener à cette situation par l'action préalable de l'opérateur d'homothétie adéquat. Soit la base hilbertienne

$$\{\Im_{m,n}^{\pi/4}\}$$

définie par:

$$\Im_{m,n}^{\pi/4}(t) = e^{i\varphi_{m,n}} e^{i\pi mt} \Im^{\pi/4}(t - n/2) \quad ,$$

m+n pair avec

$$\varphi_{m,n} = (n - mn/2 + (n^2 - m^2)/4)\pi/2$$

On vérifie aisément que l'on peut alternativement choisir la formulation suivante:

$$\begin{cases} \varphi_{m,n} = 0 & \text{si } m+n \equiv 0 \text{ modulo 4, m et n pair} \\ \varphi_{m,n} = \pi/4 & \text{si } m+n \equiv 2 \text{ modulo 4, m et n impair} \\ \varphi_{m,n} = \pi/2 & \text{si } m+n \equiv 2 \text{ modulo 4, m et n pair} \\ \varphi_{m,n} = 3\pi/4 & \text{si } m+n \equiv 0 \text{ modulo 4, m et n impair} \end{cases}$$

cette modification correspondant à une éventuelle inversion de signe des fonctions de base. La transformée IOTA π/4 d'un signal s(t) de transformée de Fourier S(f) est alors définie par les relations:

$$a_{m,n} = \Re e\left[\int s(t)\Im_{m,n}^{\pi/4 *}dt\right] = \Re e\left[\int s(t)e^{-i\varphi_{m,n}}e^{-i\pi m t}\Im^{\pi/4}(t-n/2)dt\right]$$

$$= \Re e\left[i^{-mn}\int S(f)e^{-i\varphi_{m,n}}e^{i\pi n f}\Im^{\pi/4}(f-m/2)df\right]$$

les transformées inverses étant données par:

$$s(t) = \sum_{m,n} a_{m,n}\Im_{m,n}^{\pi/4}(t) = \sum_{m,n} a_{m,n}e^{i\varphi_{m,n}}e^{i\pi m t}\Im^{\pi/4}(t-n/2)$$

$$S(f) = \sum_{m,n} i^{mn}a_{m,n}e^{i\varphi_{m,n}}e^{-i\pi n f}\Im^{\pi/4}(f-m/2)$$

1.3.2. La tranformée IOTA π/4 décrète

Choisissons T égal à 2N et W égal à 2M . Ce choix garantit l'absence de problèmes de repliement. Considérons une fonction de base

$$\Im_{m,n}^{\pi/4}.$$

On peut lui associer le vecteur

$$\vec{\Im}_{m,n}^{\pi/4}$$

de coordonnées

$$\Im_{m,n,p}^{\pi/4}$$

avec:

$$\mathfrak{I}^{\pi/4}_{m,n,p} = \sum_{q=-\infty}^{+\infty} \mathfrak{I}^{\pi/4}_{m,n}(p/W + qT) = \sum_{q=-\infty}^{+\infty} e^{i\varphi_{m,n}} e^{i\pi m(p/W+qT)} \mathfrak{I}^{\pi/4}(p/W + qT - n/2) =$$

$$e^{i\varphi_{m,n}} e^{i\pi mp/2M} \sum_{q=-\infty}^{+\infty} \mathfrak{I}^{\pi/4}\left(\frac{p-nM}{W} + qT\right) = e^{i\varphi_{m,n}} e^{i\pi mp/2M} \mathfrak{I}^{\pi/4}_{p-nM}$$

Soit un produit scalaire du type

$$\left\langle \vec{\mathfrak{I}}^{\pi/4}_{m,n} \middle| \vec{\mathfrak{I}}^{\pi/4}_{m',n'} \right\rangle_R .$$

Compte tenu des propriétés d'orthogonalité des translatées temps-fréquence de la fonction IOTA, ce produit scalaire est nul si (m, n) ≠ (m', n') mod (2M, 2N). En ce qui concerne la norme des vecteurs

$$\vec{\mathfrak{I}}^{\pi/4}_{m,n},$$

on peut écrire:

$$\left\langle \vec{\mathfrak{I}}^{\pi/4}_{m,n} \middle| \vec{\mathfrak{I}}^{\pi/4}_{m,n} \right\rangle = W \sum_{p=-\infty}^{+\infty} \sum_{q=-\infty}^{+\infty} \int_{-\infty}^{+\infty} \mathfrak{I}^{\pi/4}_{m,n}(t) \mathfrak{I}^{\pi/4*}_{m,n}(t-qT) e^{-2i\pi pWt} dt =$$

$$W \sum_{p=-\infty}^{+\infty} \sum_{q=-\infty}^{+\infty} \int_{-\infty}^{+\infty} \mathfrak{I}^{\pi/4}_{m,n}(t+qT/2) \mathfrak{I}^{\pi/4*}_{m,n}(t-qT/2) e^{-2i\pi pWt} dt = W \sum_{p=-\infty}^{+\infty} \sum_{q=-\infty}^{+\infty} A_{\mathfrak{I}^{\pi/4}_{m,n}}(qT, pW) =$$

$$W A_{\mathfrak{I}^{\pi/4}_{m,n}}(0,0) = W A_{\mathfrak{I}^{\pi/4}}(0,0) = 2M$$

Compte tenu de ces observations on peut définir la tranformée IOTA π/4 discrète de la façon suivante:

Définition

Soit M et N deux entiers quelconques. On considère 8MN vecteurs de dimension 4MN, orthogonaux au sens du produit scalaire réel, et définis de la façon suivante:

$$\mathfrak{I}^{\pi/4}_{m,n,p} = e^{i\varphi_{m,n}} e^{i\pi mp/2M} \mathfrak{I}_{p-nM}$$

m variant de 0 à 4M-1, n de 0 à 4N-1 avec m+n pair et p variant de 0 à 4MN-1

Soit $\vec{s}$ un vecteur complexe de dimension 4MN. On peut le décomposer sous la forme:

$$s_p = \sum_{m=0}^{4M-1} \sum_{\substack{n=0 \\ m+n \text{ pair}}}^{4N-1} a_{m,n} \mathfrak{I}^{\pi/4}_{m,n,p} ,$$

p variant de 0 à 4MN - 1, avec:

$$a_{m,n} = \frac{1}{2M}\Re e\left[\sum_{p=0}^{4MN-1} s_p \Im_{m,n,p}^{\pi/4}{}^{*}\right]$$

La matrice $\{a_{m,n}\}$ est la transformée IOTA $\pi/4$ du vecteur $\vec{s}$.

## 2. Les algorithmes rapides de démodulation

### 2.1. Démodulation par transformée IOTA rapide

On considère une modulation de type multiporteuse IOTA caractérisée par l'équation du signal émis:

$$s(t) = \sum_{m,n} a_{m,n} \Im_{m,n}(t)$$

Soit un canal de transmission caractérisé par sa fonction de transfert variable T(f,t). Le signal reçu r(t) s'écrit:

$$r(t) = \int S(f)T(f,t)e^{2i\pi ft}df$$

Le démodulateur optimal estime la fonction de tranfert T(f,t) par des moyens qui ne sont pas décrits à ce stade. Pour démoduler le signal proprement dit, on assimile localement le canal à un canal multiplicatif caractérisé par une amplitude et une phase correspondant à la valeur de T(f,t) pour l'instant et la fréquence considérée. Pour estimer $a_{m,n}$, le signal reçu est donc assimilé au signal:

$$\tilde{r}(t) = \int S(f)T(m/\sqrt{2},n/\sqrt{2})e^{2i\pi ft}df = T(m/\sqrt{2},n/\sqrt{2})\, s(t)$$

On posera:

$$T(m/\sqrt{2},n/\sqrt{2}) = \rho_{m,n}e^{i\theta_{m,n}}$$

Le démodulateur effectue donc le traitement suivant:

$$\tilde{a}_{m,n} = \Re e\int r(t)e^{-i\theta_{m,n}}\Im_{m,n}^{*}(t)dt$$

Dans le cas d'un canal stationnaire de fonction de transfert $\rho e^{i\theta}$, on retrouve évidemment:

$$\tilde{a}_{m,n} = \rho a_{m,n}$$

En pratique, le traitement est effectué sous forme numérique. On obtient:

$$\tilde{a}_{m,n} = \frac{1}{M\sqrt{2}} \Re\left[\sum_{p=0}^{2MN-1} r_p e^{-i\theta_{m,n}} \Im^{*}_{m,n,p}\right] = \frac{1}{M\sqrt{2}} \Re\left[e^{-i(\varphi_{m,n}+\theta_{m,n})} \sum_{p=0}^{2MN-1} e^{-i\pi mp/M} r_p \Im_{p-}\right.$$

On pose alors p = k + 2Mr, k variant de 0 à 2M-1 et r de 0 à N-1:

$$\tilde{a}_{m,n} = \frac{1}{M\sqrt{2}} \Re\left[e^{-i(\varphi_{m,n}+\theta_{m,n})} \sum_{k=0}^{2M-1} e^{-i\pi mk/M} \sum_{r=0}^{N-1} r_{k+2Mr} \Im_{k+(2r-n)M}\right]$$

Cette équation montre que l'on peut utiliser un algorithme rapide de démodulation comportant les traitements suivants:

- préfiltrage du signal reçu par la fonction prototype
- repliement de la forme d'onde filtrée modulo 2M
- FFT de dimension 2M points complexes
- correction de la phase $\theta_{m,n} + \varphi_{m,n}$
- sélection de la partie réelle

Cet algorithme permet donc de calculer globalement tous les coefficients d'un indice n donné. L'ordre de grandeur de la complexité correspondante est approximativement le double de celle de l'algorithme utilisé pour l'OFDM.

**2.2. Démodulation par transformée IOTA π/4 rapide**

On considère une modulation de type multiporteuse IOTA π/4 caractérisée par l'équation du signal émis:

$$s(t) = \sum_{m,n} a_{m,n} \Im^{\pi/4}_{m,n}(t) \quad , m+n \text{ pair}$$

Comme précédemment, le démodulateur effectue le traitement suivant:

$$\tilde{a}_{m,n} = \Re e \int r(t) e^{-i\theta_{m,n}} \Im^{\pi/4\,*}_{m,n}(t) dt$$

En pratique, le traitement est effectué sous forme numérique. On obtient:

$$\tilde{a}_{m,n} = \frac{1}{2M} \Re\left[\sum_{p=0}^{4MN-1} r_p e^{-i\theta_{m,n}} \Im^{\pi/4\,*}_{m,n,p}\right] = \frac{1}{2M} \Re\left[e^{-i(\varphi_{m,n}+\theta_{m,n})} \sum_{p=0}^{4MN-1} e^{-i\pi mp/2M} r_p \Im^{\pi/4}_{p-n?}\right.$$

On pose alors p = k + 4Mr, k variant de 0 à 4M-1 et r de 0 à N-1:

$$\tilde{a}_{m,n} = \frac{1}{2M} \Re e\left[ e^{-i(\varphi_{m,n}+\theta_{m,n})} \sum_{k=0}^{4M-1} e^{-i\pi mk/2M} \sum_{r=0}^{N-1} r_{k+2Mr} \Im_{k+(4r-n)M}^{\pi/4} \right]$$

Cette équation montre que l'on peut utiliser un algorithme rapide de démodulation comportant les traitements suivants:

- préfiltrage du signal reçu par la fonction prototype $\Im^{\pi/4}$
- repliement de la forme d'onde filtrée modulo 4M
- FFT de dimension 4M points complexes. En pratique, il suffit de calculer selon la parité de n les points pairs ou impairs. Cette FFT partielle s'effectue en décimant d'un rapport 2 les échantillons après le premier banc de papillons, ce qui équivaut à un simple préfiltrage complémentaire (somme ou différence d'échantillons). On se ramène alors à une FFT de dimension 2M points.
- correction de la phase $\theta_{m,n} + \varphi_{m,n}$
- sélection de la partie réelle

Cet algorithme permet donc de calculer globalement tous les coefficients d'un indice n donné. L'ordre de grandeur de la complexité correspondante est approximativement le double de celle de l'algorithme utilisé pour l'OFDM.

## Revendications

**1.** Signal multiporteuse s(t) destiné à être transmis vers des récepteurs numériques, notamment dans un canal de transmission non-stationnaire, correspondant au multiplexage en fréquence de plusieurs porteuses élémentaires correspondant chacunes à une série de symboles,
chaque symbole étant affecté à une porteuse pendant un temps symbole $\tau_0$ et l'espacement entre deux porteuses voisines étant égal à $\nu_0$,
**caractérisé en ce que** le réseau temps-fréquence utilisé est un réseau en quinconce, dans lequel:

- ledit temps symbole $\tau_0$ est égal au quart de l'inverse dudit espacement $\nu_0$ entre deux porteuses voisines ;
- deux symboles consécutifs émis sur une même porteuse sont espacés de deux temps symbole $\tau_0$ ; et
- les symboles émis sur deux porteuses adjacentes sont décalées du temps symbole $\tau_0$.

**2.** Signal selon la revendication 1, **caractérisé en ce que** chacune desdites porteuses subit un filtrage de mise en forme de son spectre choisi de façon que chaque symbole soit fortement concentré à la fois dans le domaine temporel et dans le domaine fréquentiel.

**3.** Signal selon l'une quelconque des revendications 1 à 2, **caractérisé en ce que** son enveloppe complexe répond à l'équation suivante :

$$s(t) = \sum_{m+n\ pair} a_{m,n} x_{m,n}(t)$$

où :

$a_{m,n}$ est un coefficient réel représentatif du signal source, choisi dans un alphabet de modulation prédéterminé;
m est un entier représentant la dimension fréquentielle;
n est un entier représentant la dimension temporelle;
t représente le temps;

$x_{m,n}(t)$ est une fonction de base, translatée dans l'espace temps-fréquence d'une même fonction prototype x (t) prenant des valeurs réelles ou complexes, soit :

$$x_{m,n}(t) = e^{i\varphi_{m,n}} e^{i(2\pi m \nu_0 t+\varphi)} x(t - n\tau_0) \qquad avec\ \upsilon_0\tau_0 = 1/4$$

avec

$$\varphi_{m,n}=(m+n+mn+(n^2-m^2)/2)\pi/2$$

où $\varphi$ est un paramètre de phase arbitraire,
et où lesdites fonctions de base $\{x_{m,n}\}$ sont orthogonales entre elles, la partie réelle du produit scalaire de deux fonctions de base différentes étant nulle.

**4.** Signal selon la revendication 3, **caractérisé en ce que** ladite fonction prototype x(t) correspondant à la rotation de 45° dans le plan temps-fréquence d'une fonction prototype permettant de définir une base hilbertienne sur un réseau temps-fréquence orthogonal de densité 1/2.

**5.** Signal selon la revendication 4, **caractérisé en ce que** ladite fonction prototype x(t) est obtenue par application de l'opérateur $F^{1/2}$, correspondant à la racine carrée d'une transformée de Fourier, sur ladite fonction prototype permettant de définir une base hilbertienne sur un réseau temps-fréquence orthogonal de densité 1/2.

**6.** Signal selon l'une quelconque des revendications 4 et 5, **caractérisé en ce que** ladite fonction prototype x(t) est une fonction identique à sa transformée de Fourier.

**7.** Signal selon la revendication 6, **caractérisé en ce que** ladite fonction prototype x(t) est la fonction prototype $\Im$.

**8.** Procédé de transmission d'un signal numérique, notamment dans un canal de transmission non-stationnaire, **caractérisé en ce qu'**il comprend les étapes suivantes:

- codage canal (92) d'un signal numérique à transmettre, délivrant des coefficients numériques réels $a_{m,n}$ choisis dans un alphabet prédéterminé ;
- construction (94) d'un signal s(t) répondant à l'équation suivante :

$$s(t) = \sum_{m+n\ pair} a_{m,n} x_{m,n}(t)$$

où :

. m est un entier représentant la dimension fréquentielle;
. n est un entier représentant la dimension temporelle;
. t représente le temps;
. $x_{m,n}(t)$ est une fonction de base, translatée dans l'espace temps-fréquence d'une même fonction prototype x(t) paire prenant des valeurs réelles ou complexes, soit :

$$x_{m,n}(t) = e^{i\varphi_{m,n}} e^{i(2\pi m \nu_0 t+\varphi)} x(t - n\tau_0) \qquad avec\ \upsilon_0\tau_0 = 1/4$$

où $\varphi$ et un paramètre de phase arbitraire,
lesdites fonctions de base $\{x_{m,n}\}$ étant orthogonales entre elles, la partie réelle du produit scalaire de deux fonctions de base différentes étant nulle;
- émission (911) d'un signal ayant pour enveloppe complexe ledit signal s(t) vers au moins un récepteur.

**9.** Procédé selon la revendication 8, **caractérisé en ce qu'**il comprend une étape d'entrelacement en fréquence et/ou en temps (93), appliquée aux éléments binaires formant ledit signal numérique à transmettre et/ou aux coefficients numériques $a_{m,n}$.

**10.** Procédé de réception d'un signal s(t) multiporteuse s(t) destiné à être transmis vers des récepteurs numériques, notamment dans un canal de transmission non-stationnaire, correspondant au multiplexage en fréquence de plusieurs porteuses élémentaires correspondant chacunes à une série de symboles,
chaque symbole étant affecté à une porteuse pendant un temps symbole $\tau_0$ et l'espacement entre deux porteuses voisines étant égal à $\nu_0$,
caractérisé en ce le réseau temps-fréquence utilisé est un réseau en quinconce dans lequel :

- ledit temps symbole $\tau_0$ est égal au quart de l'inverse dudit espacement $\nu_0$ entre deux porteuses voisines ;
- deux symboles consécutifs émis sur une même porteuse sont espacés de deux temps symbole $\tau_0$ ; et
- les symboles émis sur deux porteuses adjacentes sont décalées du temps symbole $\tau_0$,

et en ce qu'il comprend les étapes suivantes :

- réception d'un signal ayant pour enveloppe complexe un signal r(t) correspondant au signal s(t) à l'émission ;
- estimation (106) de la réponse du canal de transmission, comprenant une estimation de la réponse en phase $\theta_{m,n}$ et de la réponse en amplitude $\rho_{m,n}$ ;
- démodulation dudit signal r(t), comprenant les étapes suivantes :

- multiplication (111) dudit signal r(t) par la fonction prototype x(t) ;
- repliement (113) de la forme d'onde filtrée modulo $2\tau_0$ ;
- application (114) d'une transformée de Fourier (FFT) ;
- sélection des échantillons pour lesquels m+n est pair ;
- correction (115) de la phase $\theta_{m,n}$ induite par le canal de transmission ;
- correction (117) de la phase correspondant au terme $e^{j\varphi_{m,n}}$;
- sélection (118) de la partie réelle du coeeficient obtenu $\tilde{a}_{m,n}$ correspondant au coefficient $a_{m,n}$ émis pondéré par la réponse en amplitude $\rho_{m,n}$ du canal de transmission.

**11.** Procédé selon la revendication 10, **caractérisé en ce qu'**il comprend au moins une des étapes suivantes:

- désentrelacement (108) en fréquence et/ou en temps desdits coefficients numériques réels $\tilde{a}_{m,n}$ et, éventuellement, des valeurs correspondantes $\rho_{m,n}$ de la réponse de l'amplitude du canal, ledit désentrelacement étant symétrique à un entrelacement mis en oeuvre à l'émission;
- décodage (109) en décision pondérée adapté au codage canal mis en oeuvre à l'émission.

## Claims

**1.** Multicarrier signal s(t) intended to be transmitted to digital receivers, especially in a non-stationary transmission channel, corresponding to the frequency multiplexing of a plurality of elementary carriers each corresponding to a series of symbols,
each symbol being assigned to a carrier during a symbol time $_{0}$ and the spacing between two neighbouring carriers being equal to $_{0}$,
**characterised in that** the time-frequency lattice which is used is a quincunx lattice in which:

- the said symbol time $_{0}$ is equal to one quarter of the inverse of the said spacing $_{0}$ between two neighbouring carriers;
- two consecutive symbols transmitted on the same carrier are separated by two symbol times $_{0}$; and
- the symbols transmitted on two adjacent carriers are offset by the symbol time $_{0}$.

**2.** Signal according to Claim 1, **characterised in that** each of the said carriers is subjected to filtering to shape its spectrum, which is selected so that each symbol is strongly concentrated both in the time domain and in the frequency domain.

**3.** Signal according to either one of Claims 1 and 2, **characterised in that** its complex envelope satisfies the following equation:

$$s(t) = \sum_{m+n\ \text{even}} a_{m,n} x_{m,n}(t)$$

where:

$a_{m,n}$ is a real coefficient representing the source signal, which is selected from a predetermined modulation alphabet;
m is an integer representing the frequency dimension;
n is an integer representing the time dimension;
t represents time;
$x_{m,n}(t)$ is a base function, translated in time-frequency space, of the same prototype function x(t) taking real or complex values, i.e.:

$$x_{m,n}(t) = e^{i\varphi_{m,n}} e^{i(2\pi m \nu_0 t + \varphi)} x(t - n\hat{o}_0) \qquad \text{with } {}_{_0_0} = 1/4$$

with

$$_{_m,n} = (m+n+mn+(n^2-m^2)/2)\pi/2$$

where _ is an arbitrary phase parameter, and where the said base functions $\{x_{m,n}\}$ are mutually orthogonal, the real part of the scalar product of two different base functions being zero.

**4.** Signal according to Claim 3, **characterised in that** the said prototype function x(t) corresponding to a 45° rotation in the time-frequency plane of a prototype function making it possible to define a Hilbert base on an orthogonal time-frequency lattice with a density of 1/2.

**5.** Signal according to Claim 4, **characterised in that** the said prototype function x(t) is obtained by applying the operator $F^{1/2}$, corresponding to the square root of a Fourier transform, to the said prototype function making it possible to define a Hilbert base on an orthogonal time-frequency lattice with a density of 1/2.

**6.** Signal according to either one of Claims 4 and 5, **characterised in that** the said prototype function x(t) is a function which is identical to its Fourier transform.

**7.** Signal according to Claim 6, **characterised in that** the said prototype function x(t) is the prototype function $\mathfrak{I}$.

**8.** Method for transmitting a digital signal, especially in a non-stationary transmission channel, **characterised in that** it comprises the following steps:

- channel encoding (92) of a digital signal to be transmitted, delivering real numerical coefficients $a_{m,n}$ selected from a predetermined alphabet;
- construction (94) of a signal s(t) satisfying the following equation:

$$s(t) = \sum_{m+n\ \text{even}} a_{m,n} x_{m,n}(t)$$

where:

. m is an integer representing the frequency dimension;
. n is an integer representing the time dimension;
. t represents time;
. $x_{m,n}(t)$ is a base function, translated in time-frequency space, of the same even prototype function x(t) taking real or complex values, i.e.:

$$x_{m,n}(t) = e^{i\varphi_{m,n}} e^{i(2\pi m\nu_0 t+\varphi)} x(t-n\hat{o}_0) \qquad \text{with } _{}_0_{}_0 = 1/4$$

where _ is an arbitrary phase parameter,

the said base functions $\{x_{m,n}\}$ being mutually orthogonal, the real part of the scalar product of two different base functions being zero;

- transmission (911) of a signal, which has the said signal s(t) as its complex envelope, to at least one receiver.

**9.** Method according to Claim 8, **characterised in that** it comprises a step (93) of frequency and/or time interleaving, which is applied to the binary elements forming the said digital signal to be transmitted and/or to the numerical coefficients $a_{m,n}$.

**10.** Method for receiving a multicarrier s(t) signal s(t) which is intended to be transmitted to digital receivers, especially in a non-stationary transmission channel, corresponding to the frequency multiplexing of a plurality of elementary carriers each corresponding to a series of symbols,
each symbol being assigned to a carrier during a symbol time $_{}_0$ and the spacing between two neighbouring carriers being equal to $_{}_0$,
**characterised in that** the time-frequency lattice which is used is a quincunx lattice in which:

- the said symbol time $_{}_0$ is equal to one quarter of the inverse of the said spacing $_{}_0$ between two neighbouring carriers;
- two consecutive symbols transmitted on the same carrier are separated by two symbol times $_{}_0$; and
- the symbols transmitted on two adjacent carriers are offset by the symbol time $_{}_0$,

and **in that** it comprises the following steps:

- reception of a signal which has as its complex envelope a signal r(t) corresponding to the signal s(t) at transmission;
- estimation (106) of the response of the transmission channel, comprising an estimation of the phase response $_{}_{m,n}$ and the amplitude response $_{}_{m,n}$;
- demodulation of the said signal r(t), comprising the following steps:

- multiplication (111) of the said signal r(t) by the prototype function x(t);
- aliasing (113) of the filtered waveform modulo 2 $_{}_0$;
- application (114) of a Fourier transform (FFT);
- selection of the samples for which m+n is even;
- correction (115) of the phase $_{}_{m,n}$ induced by the transmission channel;
- correction (117) of the phase corresponding to the term $e^{i\varphi_{m,n}}$;
- selection (118) of the real part of the obtained coefficient $\tilde{a}_{m,n}$ corresponding to the transmitted coefficient $a_{m,n}$ weighted with the amplitude response $_{}_{m,n}$ of the transmission channel.

**11.** Method according to Claim 10, **characterised in that** it comprises at least one of the following steps:

- frequency and/or time de-interleaving (108) of the said real numerical coefficients $\tilde{a}_{m,n}$ and, optionally, the corresponding values $_{}_{m,n}$ of the amplitude response of the channel, the said de-interleaving being symmetrical with an interleaving carried out at transmission;
- weighted-decision decoding (109) suitable for the channel encoding used at transmission.

## Patentansprüche

**1.** Mehrträger-Signal s(t), das zu digitalen Empfängern gesendet werden soll, insbesondere in einem nicht stationären Sendekanal, welches dem Frequenzmultiplexieren mehrerer, jeweils einer Symbolreihe entsprechender, elementarer Trägerfrequenzen entspricht,
wobei jedes Symbol einer Trägerfrequenz während einer Symboldauer $\tau_0$ zugeordnet ist und wobei der Abstand zwischen zwei benachbarten Trägerfrequenzen $\nu_0$ beträgt,
**dadurch gekennzeichnet, dass** das verwendete Zeit-Frequenz-Gitter ein versetztes Gitter ist, wobei:

- die erwähnte Symboldauer $\tau_0$ gleich einem Viertel des Abstandes $\nu_0$ zwischen zwei benachbarten Trägerfrequenzen ist;
- der Abstand zweier aufeinander folgender Symbole, die über die selbe Trägerfrequenz gesendet werden, zwei Symboldauern $\tau_0$ beträgt; und
- die über zwei benachbarte Trägerfrequenzen gesendeten Symbole um die Symboldauer $\tau_0$ gegeneinander verschoben sind.

2. Signal nach Anspruch 1, **dadurch gekennzeichnet, dass** jede der erwähnten Trägerfrequenzen eine Filterung zum Formen des jeweils gewählten Spektrums unterzogen wird, so dass ein jedes Symbol stark konzentriert ist, im Zeit- wie im Frequenzbereich.

3. Signal nach einem der Ansprüche 1 oder 2, **dadurch gekennzeichnet, dass** seine komplexe Einhüllende der folgenden Gleichung entspricht:

$$s(t) = \sum_{m+n \text{ gerade}} a_{m,n} x_{m,n}(t)$$

wobei:

$a_{mn}$ ein reeller, für das Quellensignal repräsentativer Koeffizient ist, der in einem vorgegebenen Modulationsalphabet gewählt wurde;
m eine die Frequenzdimension darstellende ganze Zahl ist;
n eine die Zeitdimension darstellende ganze Zahl ist;
t die Zeit darstellt;
$x_{m,n}(t)$ eine in den Zeit-Frequenzraum einer selben Prototypfunktion x(t) versetzte Grundfunktion ist, wobei die Funktion x(t) reelle oder komplexe Werte annimmt, d.h.:

$$x_{m,n}(t) = e^{i\varphi_{m,n}} e^{i(2\pi m \nu_0 t + \varphi)} x(t - n\tau_0)$$

wobei $\nu_0 \tau_0 = 1/4$
mit

$$\varphi_{m,n} = (m + n + mn + (n^2 - m^2)/2)\pi/2$$

wobei $\varphi$ ein beliebiger Phasenparameter ist und
wobei die erwähnten Grundfunktionen $\{x_{m,n}\}$ untereinander orthogonal sind, wobei der reelle Teil des Skalarproduktes zweier verschiedener Grundfunktionen null ist.

4. Signal nach Anspruch 3, **dadurch gekennzeichnet, dass** die einer 45°-Drehung in der Zeit-Frequenz-Ebene einer Prototypfunktion entsprechende Prototypfunktion x(t) das Definieren einer Hilbert'schen Basis über ein orthogonales Zeit-Frequenz-Gitter mit der Dichte 1/2 ermöglicht.

5. Signal nach Anspruch 4, **dadurch gekennzeichnet, dass** die erwähnte Prototypfunktion x(t) durch Anwendung des der Quadratwurzel einer Fouriertransformierten entsprechenden Operators $F^{1/2}$ auf die Prototypfunktion erhalten wird, welche das Definieren einer Hilbert'schen Basis über ein orthogonales Zeit-Frequenz-Gitter mit der Dichte 1/2 ermöglicht.

6. Signal nach einem der Ansprüche 4 oder 5, **dadurch gekennzeichnet, dass** die Prototypfunktion x(t) eine Funktion ist, die ihrer Fouriertransformierten identisch ist.

7. Signal nach Anspruch 6, **dadurch gekennzeichnet, dass** die Prototypfunktion x(t) die Prototypfunktion J ist.

8. Sendeverfahren eines digitalen Signals, insbesondere über einen nicht stationären Sendekanal, **dadurch gekennzeichnet, dass** es die folgenden Schritte umfasst:

- Kanalkodierung (92) eines zu sendenden Digitalsignals, das reelle digitale Koeffizienten $a_{m,n}$ liefert, die aus einem vorgegebenen Alphabet gewählt wurden;
- Konstruktion (94) eines Signals s(t) nach der folgenden Gleichung:

$$s(t) = \sum_{m+n \text{ gerade}} a_{m,n} x_{m,n}(t)$$

wobei:

. m eine die Frequenzdimension darstellende ganze Zahl ist;
. n eine die Zeitdimension darstellende ganze Zahl ist;
. t die Zeit darstellt;
. $x_{m,n}(t)$ eine in den Zeit-Frequenzraum einer selben Prototypfunktion x(t) versetzte Grundfunktion ist, wobei die Funktion x(t) reelle oder komplexe Werte annimmt, d.h.:

$$x_{m,n}(t) = e^{i\varphi_{m,n}} e^{i(2\pi m \nu_0 t + \varphi)} x(t - n\tau_0)$$

wobei $\nu_0 \tau_0 = 1/4$
wo $\varphi$ ein beliebiger Phasenparameter ist,
wo die erwähnten Grundfunktionen $\{x_{m,n}\}$ untereinander orthogonal sind,
wobei der reelle Teil des Skalarproduktes zweier verschiedener Grundfunktionen null ist;

- Senden (911) eines Signals, dessen komplexe Umhüllende das erwähnte Signal s(t) zu mindestens einem Empfänger ist.

**9.** Verfahren nach Anspruch 8, **dadurch gekennzeichnet, dass** es einen Verschachtelungsschritt nach Frequenz und/oder Zeit (93) umfasst, angewandt auf die Binärelemente, die das zu sendende Digitalsignal bilden und/oder auf die digitalen Koeffizienten $a_{m,n}$.

**10.** Empfangsverfahren eines Mehrträgersignals s(t), das zu digitalen Empfängern gesendet werden soll, insbesondere in einem nicht stationären Sendekanal, welches dem Frequenzmultiplexieren mehrerer, jeweils einer Symbolreihe entsprechender, elementarer Trägerfrequenzen entspricht,
wobei jedes Symbol einer Trägerfrequenz während einer Symboldauer $\tau_0$ zugeordnet ist und wobei der Abstand zwischen zwei benachbarten Trägerfrequenzen $\nu_0$ beträgt,
**dadurch gekennzeichnet, dass** das verwendete Zeit-Frequenz-Gitter von der versetzten Art ist, wobei:

- die erwähnte Symboldauer $\tau_0$ gleich einem Viertel des Abstandes $\nu_0$ zwischen zwei benachbarten Trägerfrequenzen ist;
- der Abstand zweier aufeinander folgender Symbole, die über die selbe Trägerfrequenz gesendet werden, zwei Symboldauem $\tau_0$ beträgt;
- die über zwei benachbarte Trägerfrequenzen gesendeten Symbole um die Symboldauer $\tau_0$ gegeneinander verschoben sind,

und dadurch, dass es die folgenden Schritte umfasst:

- Empfang eines Signals, dessen komplexe Einhüllende ein dem Signal s(t) beim Senden entsprechendes Signal r(t) ist;
- Abschätzen (106) der Antwort des Sendekanals, die eine Abschätzung der gleichphasigen Antwort mit der Phase $\theta_{m,n}$ und der Antwortamplitude $\rho_{m,n}$ umfasst;
- Demodulierung des Signals r(t), das die folgenden Schritte umfasst:
  - Multiplikation (111) des Signals r(t) durch die Prototypfunktion x(t);
  - Aliasing (113) der gefilterten Wellenform Modulo $2\tau_0$;
  - Anwendung (114) einer Fouriertransformierten (FFT);
  - Auswahl der Muster, für die m + n gerade ist;

- Korrektur (115) der vom Sendekanal induzierten Phase $\theta_{m,n}$;
- Korrektur (117) der dem Term $e^{i\varphi_{m,n}}$ entsprechenden Phase;
- Auswahl (118) des reellen Teils des erhaltenen Koeffizienten $\tilde{a}_{m,n}$, der dem gesendeten Koeffizienten $a_{m,n}$ entspricht, welcher von der Antwortamplitude $\rho_{m,n}$ des Sendekanals gewichtet wird.

**11.** Verfahren nach Anspruch 10, **dadurch gekennzeichnet, dass** es mindestens eins der folgenden Schritte umfasst:

- Entschachtelung (108) nach der Frequenz und/oder der Zeit der reellen digitalen Koeffizienten $\tilde{a}_{m,n}$

und, eventuell, der entsprechenden Werte $\rho_{m,n}$ der Antwort der Kanalamplitude, wobei die Entschachtelung symmetrisch zu einer beim Senden angewendeten Verschachtelung ist;

- Dekodieren (109) nach einer gewichteten Entscheidung, die der beim Senden eingesetzten Kanalkodierung angepasst ist.

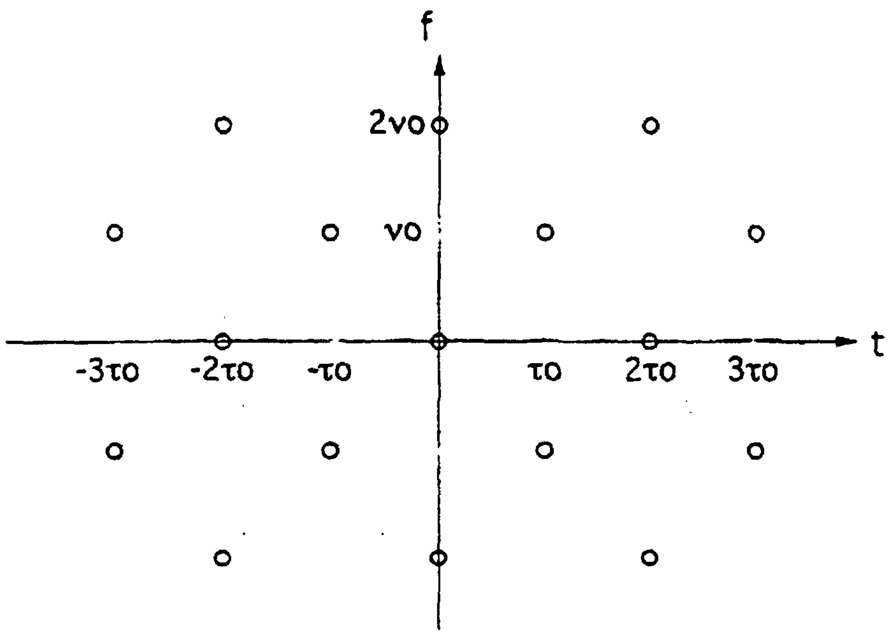


Fig. 1

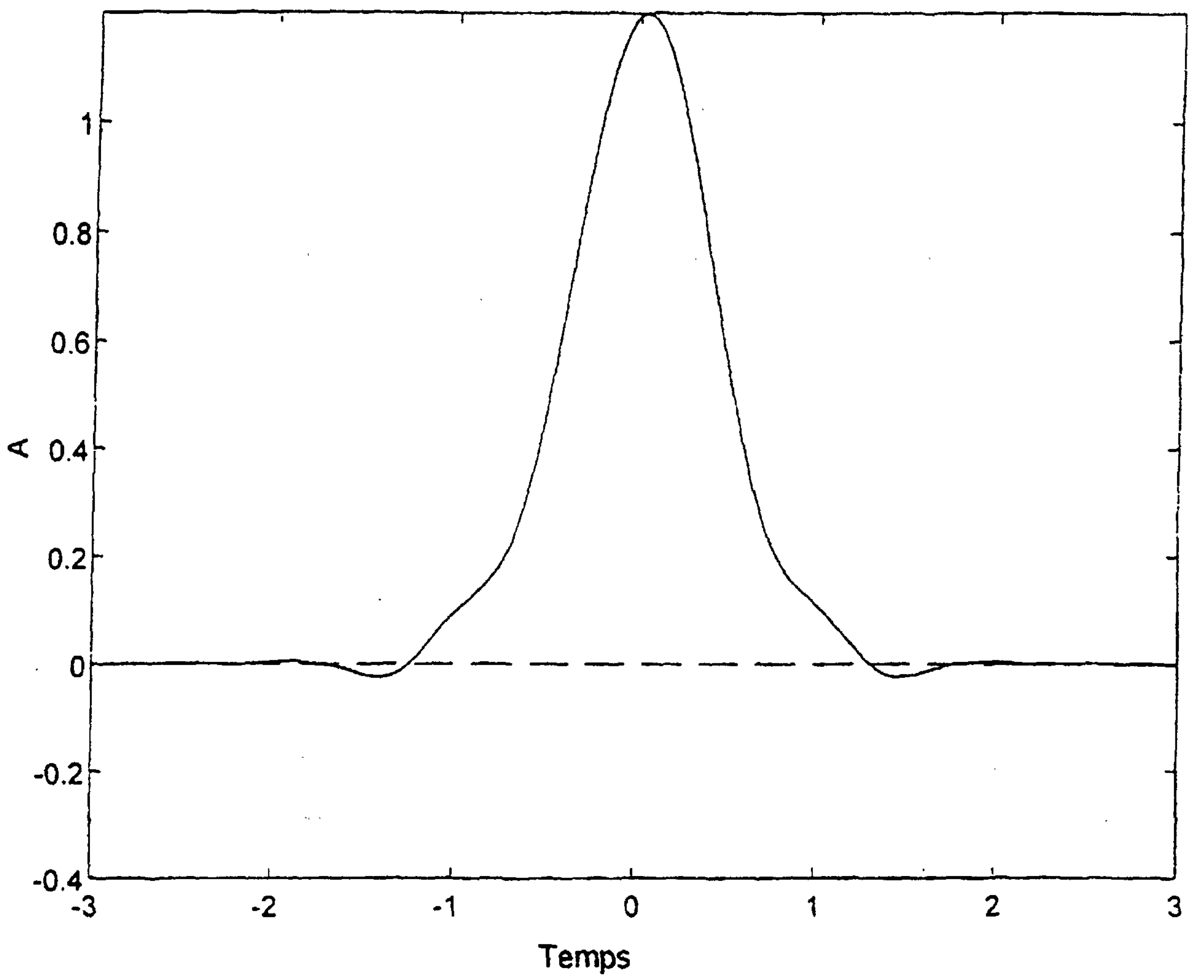


Fig. 2A

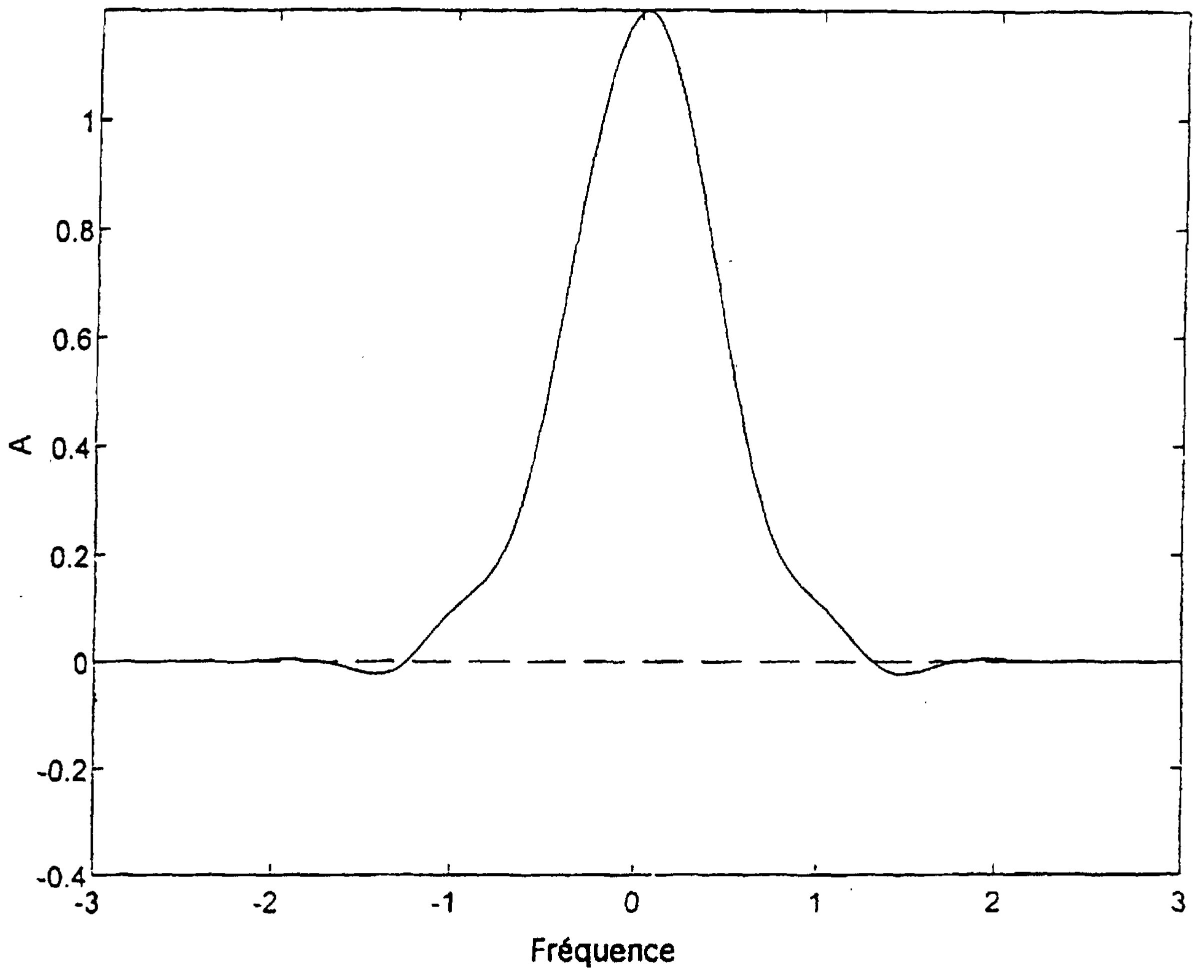


Fig. 2B

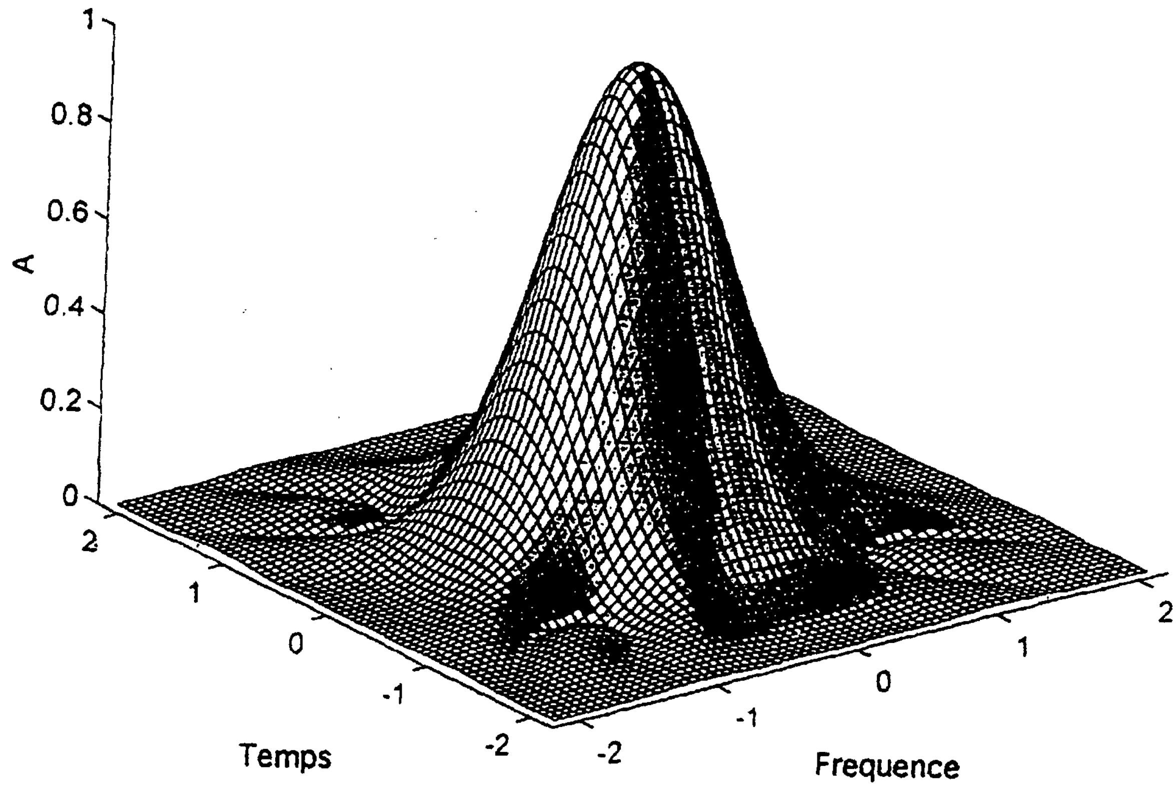


Fig. 2C

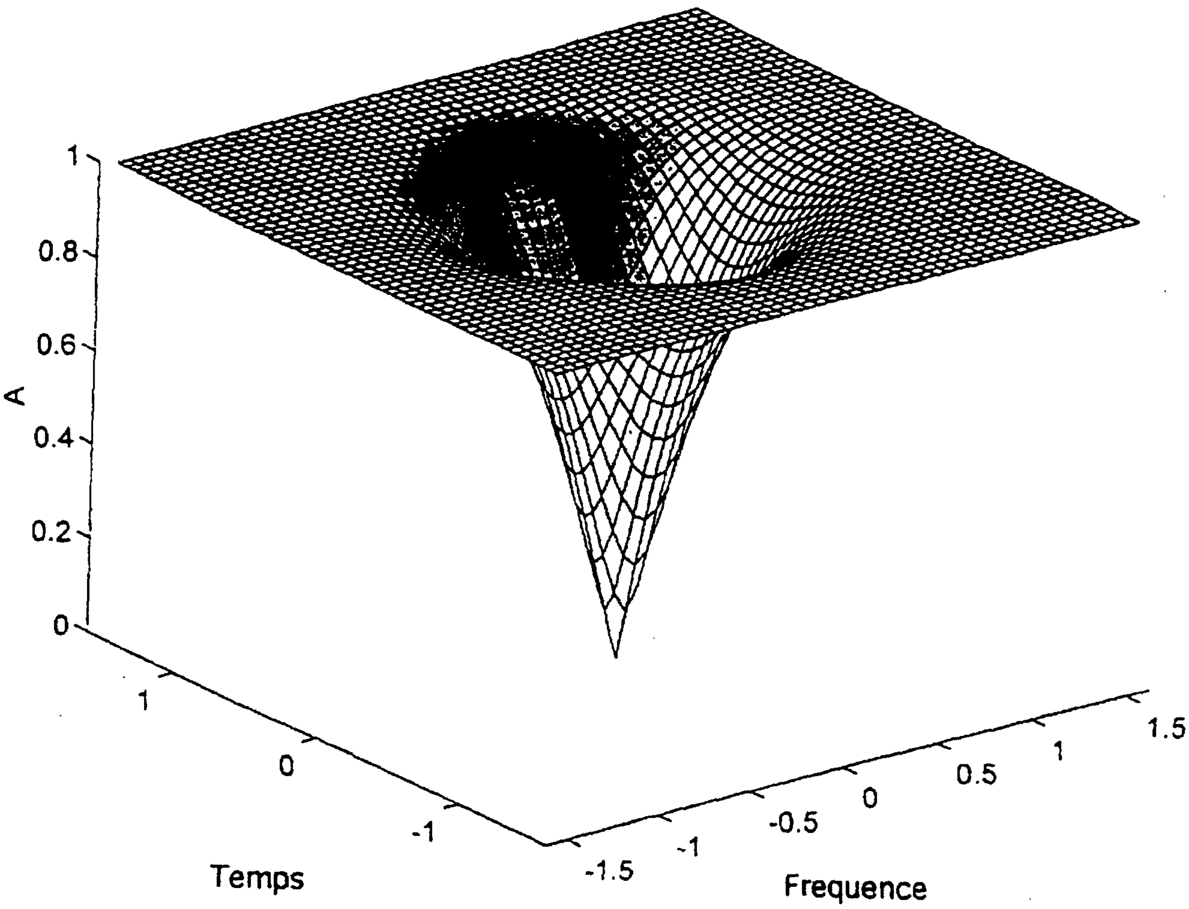


Fig. 2D

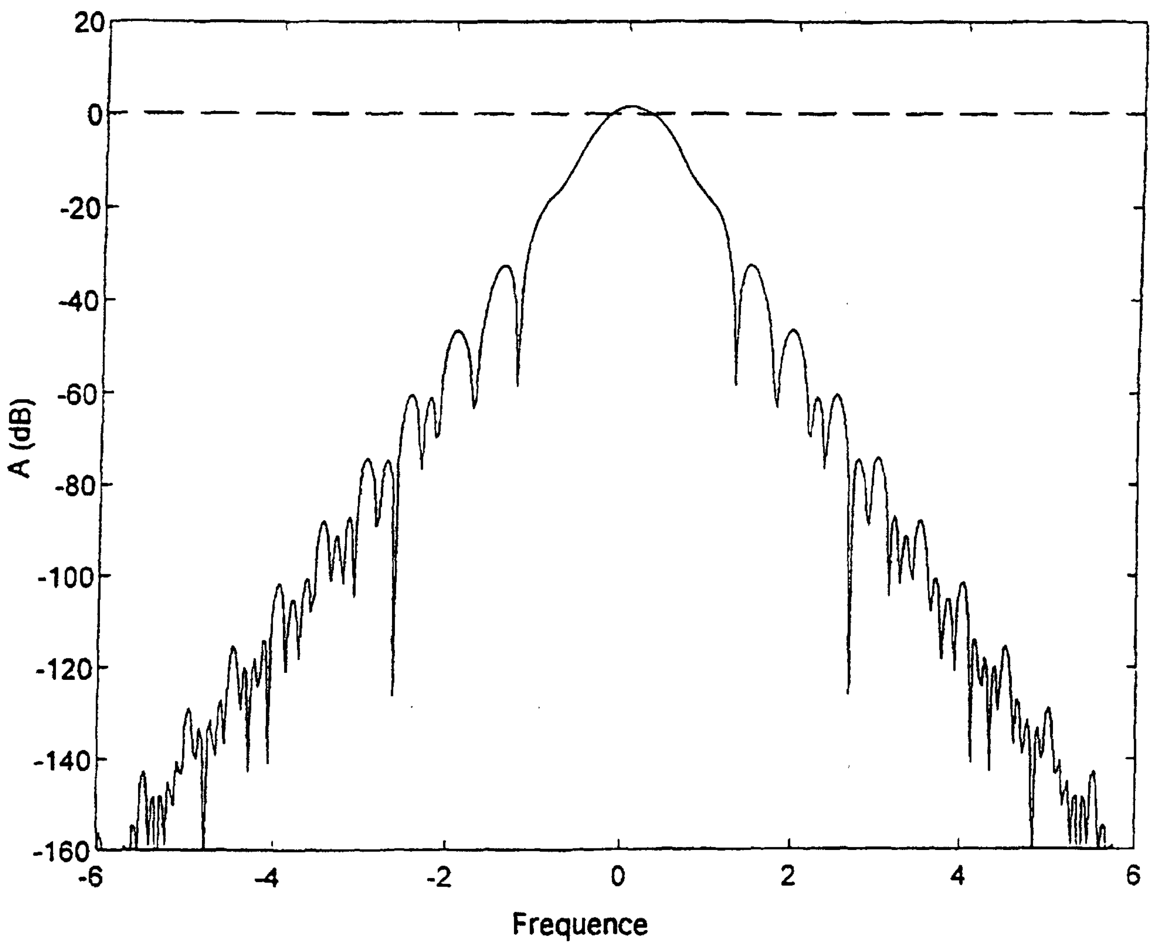


Fig. 2E

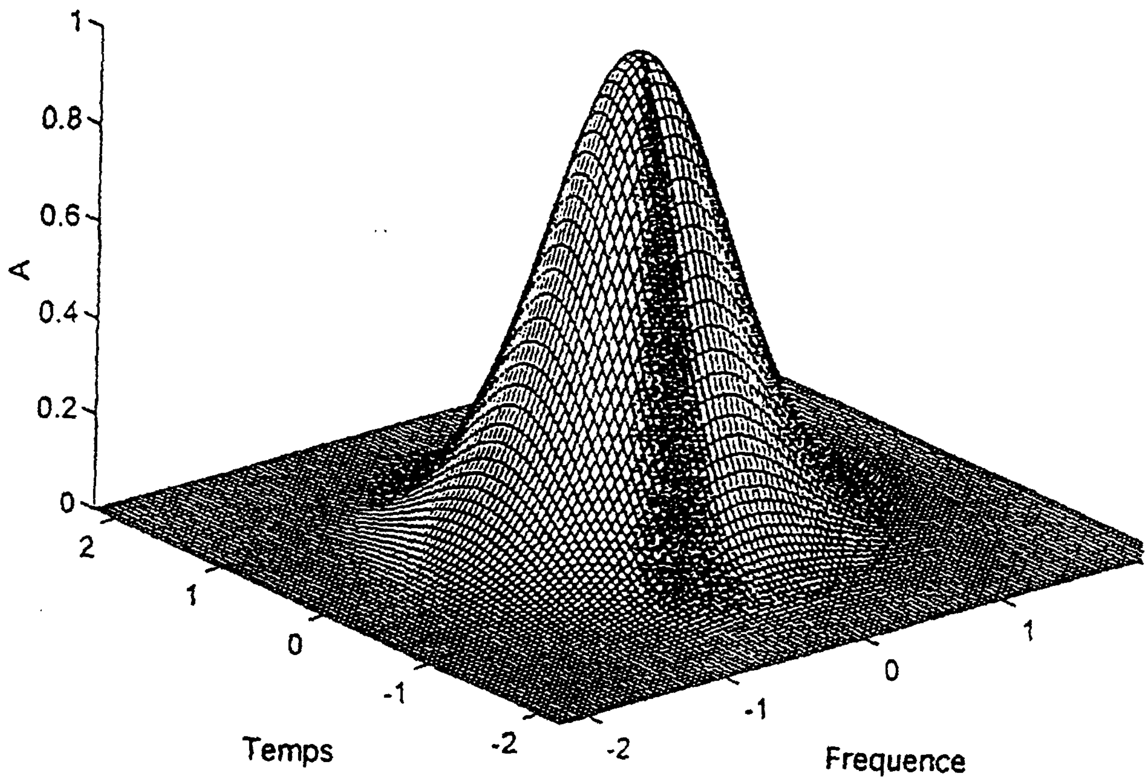


Fig. 3

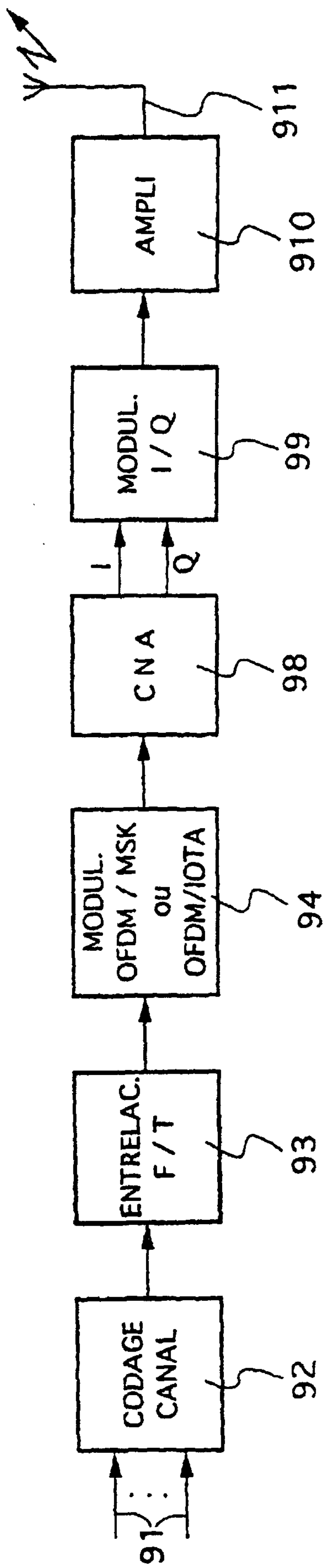
CODAGE CANAL
ENTRELAC. F / T
MODUL. OFDM / MSK ou OFDM/IOTA
C N A
I
Q
MODUL. I / Q
AMPLI
91
92
93
94
98
99
910
911

Fig. 4

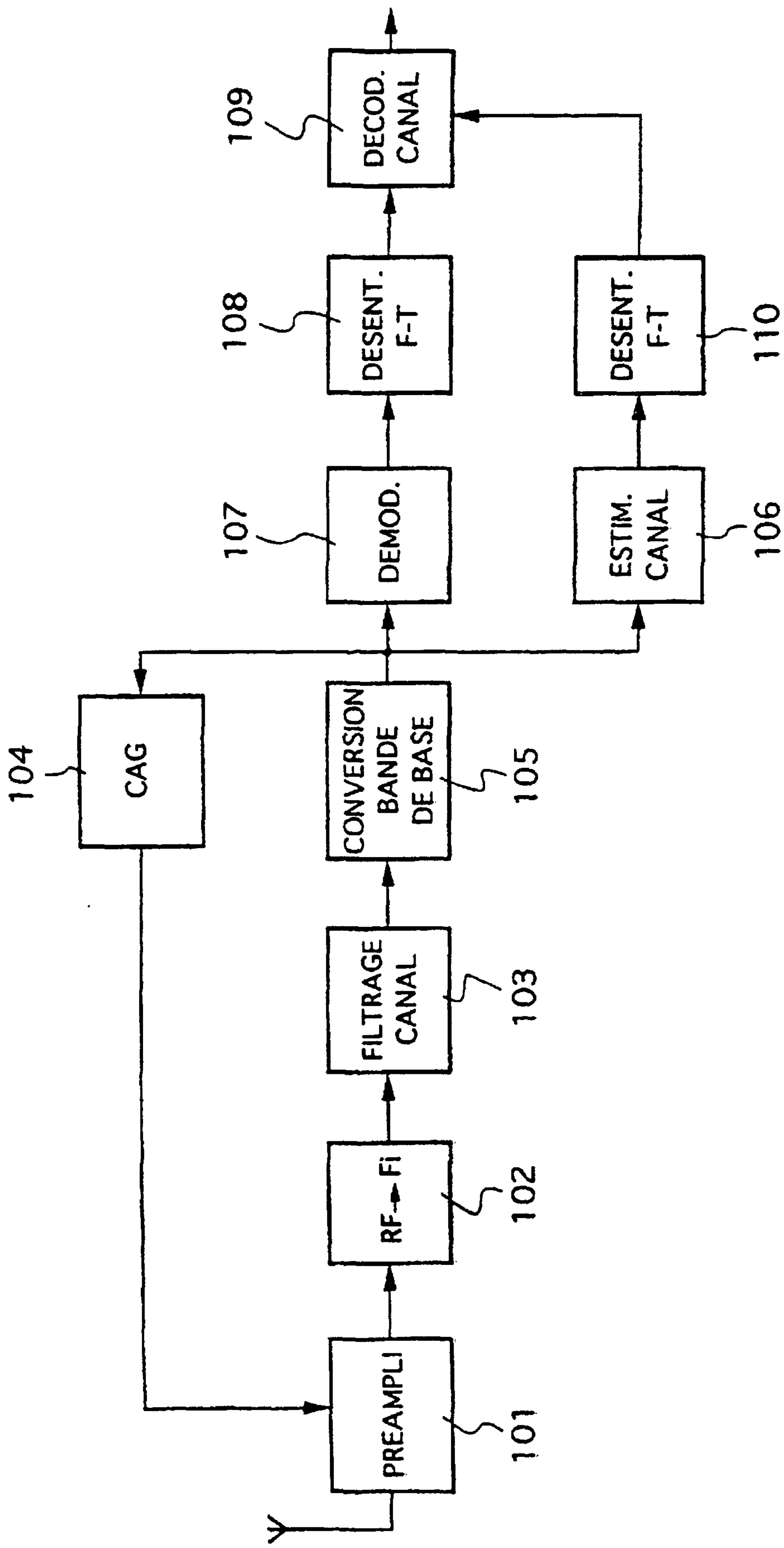
PREAMPLI
101
RF→Fi
102
FILTRAGE CANAL
103
CAG
104
CONVERSION BANDE DE BASE
105
ESTIM. CANAL
106
DEMOD.
107
DESENT. F-T
108
DECOD. CANAL
109
DESENT. F-T
110

Fig. 5

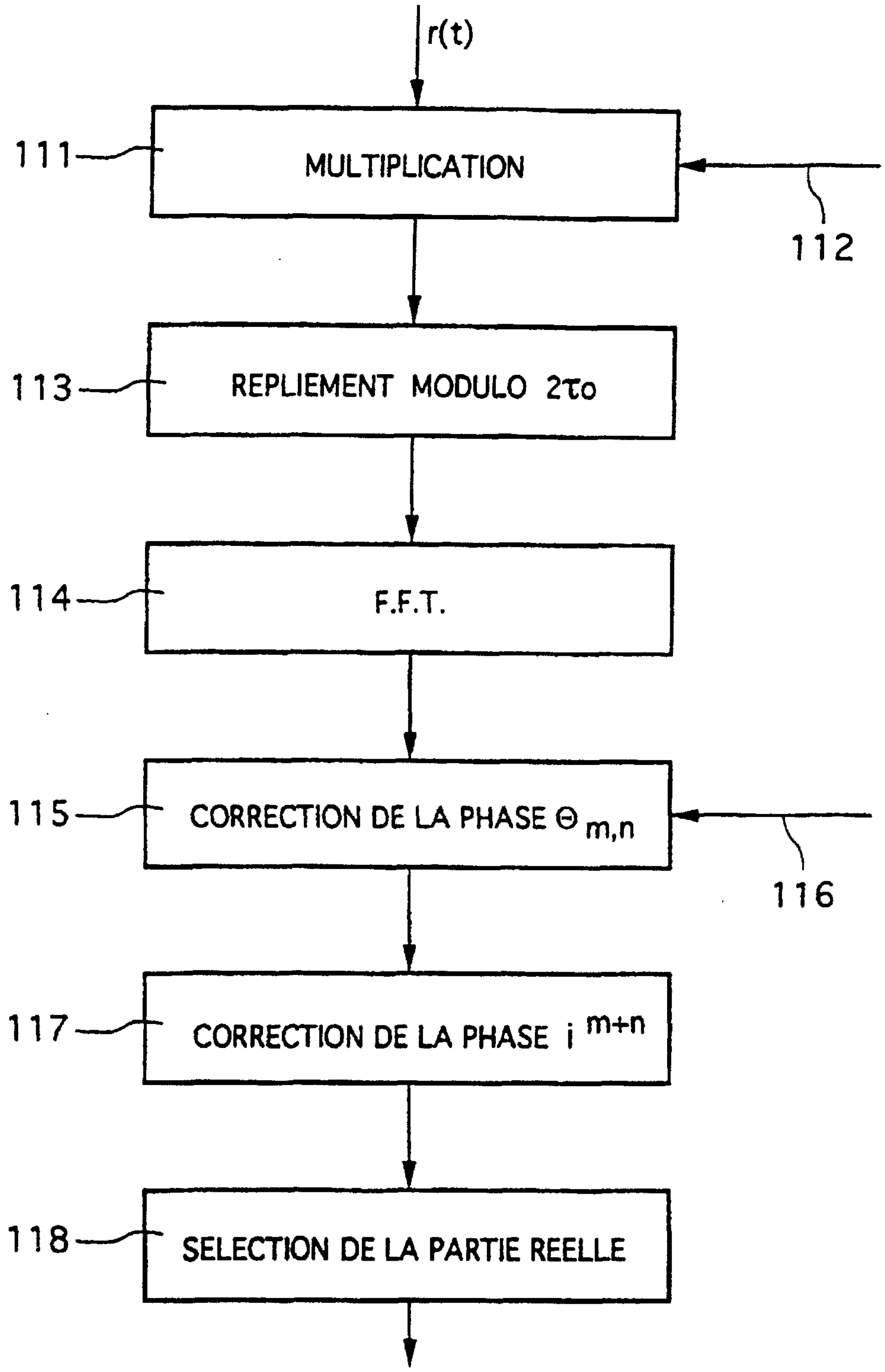
r(t)
111
MULTIPLICATION
112
113
REPLIEMENT MODULO 2τo
114
F.F.T.
115
CORRECTION DE LA PHASE Θ m,n
116
117
CORRECTION DE LA PHASE i m+n
118
SELECTION DE LA PARTIE REELLE

Fig. 6